# EUROPEAN PATENT SPECIFICATION

(11) **EP 4 095 696 B1**
(45) Date of publication and mention of the grant of the patent: **19.06.2024**
(21) Application number: 20934264.1
(22) Date of filing: 02.11.2020
(51) Int. Cl.: G06F 11/30, G06F 13/40

(54) **RS485 INTERFACE ACCESS STATE DETECTION CIRCUIT AND DETECTION METHOD**
RS485-SCHNITTSTELLENZUGRIFFSZUSTANDSERKENNUNGSSCHALTUNG UND DETEKTIONSVERFAHREN
CIRCUIT DE DÉTECTION ET PROCÉDÉ DE DÉTECTION D'ÉTAT D'ACCÈS À UNE INTERFACE RS485

(30) Priority: 08.05.2020 CN 202010384559
(43) Date of publication of application: 30.11.2022
(73) Proprietor: SPL Electronic Technology Co., Ltd, Shenzhen, Guangdong 518000 (CN)
(72) Inventor: PANG, Hao, Shenzhen, Guangdong 518000 (CN)
(74) Representative: 2SPL Patentanwälte PartG mbB
(86) International application number: PCT/CN2020/125831
(87) International publication number: WO 2021/223384

(56) References cited:
- CN-A- 102 169 472
- CN-A- 102 521 193
- CN-A- 102 521 193
- CN-A- 103 424 660
- CN-A- 111 522 720
- CN-A- 111 522 720
- CN-B- 102 901 904
- JP-A- 2014 068 091

## Description

### TECHNICAL FIELD

The present disclosure generally relates to the technical field of integrated circuits (ICs) of universal communication interfaces, and in particular to a detection circuit and detection method for an access state of an RS485 interface.

### BACKGROUND ART

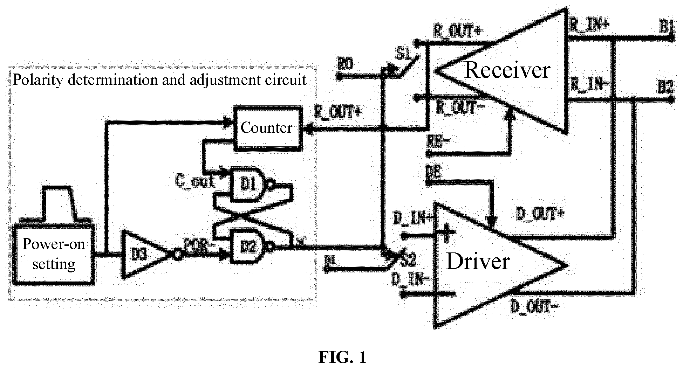

An RS485 standard serial electrical interface is commonly used for communications between two devices by two signal lines and a serial data stream, and has been widely applied to various device communications. At present, there have been implementation circuits, in which polarities of the two signal lines of the RS485 interface are not distinguished. For example, a Chinese Patent Application No. CN201110457537.7, titled "Non-polarized RS-RS485 Interface Circuit", describes an implementation circuit of the non-polarized RS485 interface. As shown in FIG. 1, a polarity determination and adjustment circuit includes a counter, a power-on setting circuit, a NOT gate D3, and two NAND gates D1 and D2. A first bidirectional switch S1 is provided between an in-phase output terminal R_OUT+ and a reverse-phase output terminal R_OUT- of a receiver. A second bidirectional switch S2 is provided between an in-phase input terminal D_IN+and a reverse-phase input terminal D_IN- of a driver. A control terminal SC of each of the first bidirectional switch S1 and the second bidirectional switch S2 is connected to an output pin of the NAND gate D2 in the connected polarity determination and adjustment circuit. The connected polarity determination and adjustment circuit is connected to the output terminal R_OUT+ of the receiver. Polarities of existing non-polarized RS485 chips are determined as follows: When DE=0, namely a driver output enable signal of an RS485 interface circuit is in OFF state, and D_OUT+ and D_OUT- are in a high-impedance (Hi-Z) state, and RE-=1, namely a receiver input enable signal is valid, and R_OUT+ and R_OUT- output the received data by judging the voltage between R_IN+ and R_IN- according to the RS485 protocol. If received data RO outputs 0 for preset time Rs (about 0.5 s) of a counter under a polarity switching state of the present RS485 interface, a level of a polarity control signal SC output from the polarity determination and adjustment circuit is inverted, and the inverted received data RO outputs 1.

The existing RS485 interface circuit neither detects a shorted fault and an open fault of the RS485 interface, nor monitors a state that a device on the RS485 interface is accessed to the circuit. Since the driver output D_OUT+ and D_OUT- and receiver input R_IN+ and R_IN- in the RS485 interface circuit are all connected to RS485 terminals B1 and B2, when the driver output enable signal DE of the existing RS485 interface circuit is valid, an input interface of the existing RS485 interface circuit generates an input signal according to own output data. As a result, self-transmitting self-receiving (STSR) unwanted data appear, which is a problem to be solved urgently at present.

### SUMMARY

The scope of present invention is defined by the appended claims. According to an aspect, the present disclosure relates to a detection circuit configured to carry out a method as described below for handling an access state of an RS485 interface, including a polarity determination circuit, a timer circuit, a driver circuit, a receiver circuit, and a test output circuit, where
a functional state setting signal ST input terminal of the polarity determination circuit is configured to input a functional state setting signal ST;
a timer clearing signal CL output terminal of the polarity determination circuit is connected to a timer clearing signal CL input terminal of the timer circuit;
a timer overflow indication signal OV input terminal of the polarity determination circuit is connected to a timer overflow indication signal OV output terminal of the timer circuit;
a transmitted data input signal input terminal of the polarity determination circuit is configured to input a transmitted data input signal XD;
a received data output signal input terminal of the polarity determination circuit is connected to a received data output signal RD output terminal of the receiver circuit;
a transmitted data input signal input terminal of the driver circuit is configured to input the transmitted data input signal XD;
a polarity determination result signal Ps input terminal of the driver circuit is connected to a polarity determination result signal Ps output terminal of the polarity determination circuit;
an output enable signal Xe input terminal of the driver circuit is connected to an output enable signal Xe output terminal of the polarity determination circuit;
the driver circuit includes a driver output signal X1 output terminal connected to an terminal C of the RS485 interface, and a driver output signal X2 output terminal connected to an terminal D of the RS485 interface;
a polarity determination result signal Ps input terminal of the receiver circuit is connected to the polarity determination result signal Ps output terminal of the polarity determination circuit;
an output setting input signal SI input terminal of the receiver circuit is connected to an output setting input signal SI output terminal of the polarity determination circuit;
an output setting enable signal Se input terminal of the receiver circuit is connected to an output setting enable signal Se output terminal of the polarity determination circuit;
a receiver enable signal Re input terminal of the receiver circuit is connected to a receiver enable signal Re output terminal of the polarity determination circuit;
a hysteretic region indication signal Hy output terminal of the receiver circuit is connected to a hysteretic region indication signal Hy input terminal of the polarity determination circuit;
a received input signal R1 input terminal of the receiver circuit is connected to the terminal C of the RS485 interface and the driver output signal X1 output terminal of the driver circuit;
a received input signal R2 input terminal of the receiver circuit is connected to the terminal D of the RS485 interface and the driver output signal X2 output terminal of the driver circuit;
the received data output signal RD output terminal of the receiver circuit is configured to output a received data output signal RD;
a polarity determination result signal Ps input terminal of the test output circuit is connected to the polarity determination result signal Ps output terminal of the polarity determination circuit;
a test output enable signal Te input terminal of the test output circuit is connected to a test output enable signal Te output terminal of the polarity determination circuit;
a test output signal T1 output terminal of the test output circuit is connected to the terminal C of the RS485 interface and the driver output signal X1 output terminal of the driver circuit; and
a test output signal T2 output terminal of the test output circuit is connected to the terminal D of the RS485 interface and the driver output signal X2 output terminal of the driver circuit.

According to another aspect, the present disclosure further relates to a detection method for handling an access state of an RS485 interface, including:
1) determining whether a functional state setting signal ST input from a functional state setting signal ST input terminal of a polarity determination circuit is a shutdown signal, an output signal, an input signal, or a test signal; going to step 2) in response to the shutdown signal; going to step 3) in response to the output signal; going to step 4) in response to the input signal; and going to step 5) in response to the test signal;
2) keeping a polarity determination result Ps output from a polarity determination result signal Ps output terminal of the polarity determination circuit unchanged;
   setting a timer clearing signal CL output from a timer clearing signal CL output terminal of the polarity determination circuit as valid, such that a timer circuit is cleared to zero, and a timer overflow indication signal OV output from a timer overflow indication signal OV output terminal of the timer circuit is invalid;
   setting a receiver enable signal Re output from a receiver enable signal output terminal of the polarity determination circuit as invalid, an output setting input signal SI output from an output setting input signal output terminal of the polarity determination circuit as any state, and an output setting enable signal Se output from an output setting enable signal output terminal of the polarity determination circuit as any state, thereby controlling a received data output signal RD output from a received data output signal output terminal of a receiver circuit in a Hi-Z state;
   setting an output enable signal Xe output from an output enable signal output terminal of the polarity determination circuit as invalid, such that both a driver output signal X1 output terminal and a driver output signal X2 output terminal of a driver circuit are in a Hi-Z state; and
   setting a test output enable signal Te output from a test output enable signal output terminal of the polarity determination circuit as invalid, such that both a test output signal T1 output terminal and a test output signal T2 output terminal of a test circuit are in a Hi-Z state;
3) keeping the polarity determination result signal Ps output from the polarity determination result signal output terminal of the polarity determination circuit unchanged; setting the timer clearing signal CL output from the timer clearing signal output terminal of the polarity determination circuit as valid, such that the timer circuit is cleared to the zero, and the timer overflow indication signal output terminal of the timer circuit outputs the timer overflow indication signal OV; and setting the receiver enable signal Re output from the receiver enable signal output terminal of the polarity determination circuit as valid, the output setting enable signal Se output from the output setting enable signal output terminal of the polarity determination circuit as valid, the output setting input signal SI output from the output setting input signal output terminal of the polarity determination circuit as 1, and the received data output signal RD output from the received data output signal output terminal of the receiver circuit as a default 1;
   setting the test output enable signal Te output from the test output enable signal output terminal of the polarity determination circuit as invalid, such that both the test output signal T1 output terminal and the test output signal T2 output terminal of the test circuit are in the Hi-Z state; and
   setting the output enable signal Xe output from the polarity determination circuit as valid, such that the driver circuit drives a differential output for the driver output signal X1 output terminal and the driver output signal X2 output terminal according to an input polarity determination result signal Ps and a transmitted data input signal XD with a following output rule:
   when the polarity determination result signal Ps indicates that polarities are normal, namely Ps=0: if the transmitted data input signal XD is 0, a negative voltage -Va is output between the driver output signal X1 output terminal and the driver output signal X2 output terminal of the driver circuit; and if the transmitted data input signal XD is 1, a positive voltage V₀ is output between the driver output signal X1 output terminal and the driver output signal X2 output terminal of the driver circuit;
   when the polarity determination result signal Ps indicates that the polarities are opposite, namely Ps=1: if the transmitted data input signal XD is 0, the positive voltage V₀ is output between the driver output signal X1 output terminal and the driver output signal X2 output terminal of the driver circuit; and if the transmitted data input signal XD is 1, the negative voltage -Va is output between the driver output signal X1 output terminal and the driver output signal X2 output terminal of the driver circuit, V₀ being a voltage satisfying an output voltage standard of the RS485 interface;
4) keeping the polarity determination result Ps output from the polarity determination circuit unchanged; and setting the timer clearing signal CL output from the timer clearing signal output terminal of the polarity determination circuit as valid, such that the timer circuit is cleared to the zero, and the timer overflow indication signal OV output from the timer overflow indication signal output terminal of the timer circuit is invalid;
   setting the output enable signal Xe output from the output enable signal output terminal of the polarity determination circuit as invalid, such that both the driver output signal X1 output terminal and the driver output signal X2 output terminal of the driver circuit that are correspondingly connected to an terminal C and an terminal D of the RS485 interface are in the Hi-Z state;
   setting the test output enable signal Te output from the test output enable signal output terminal of the polarity determination circuit as invalid, such that both the test output signal T1 output terminal and the test output signal T2 output terminal of the test circuit that are correspondingly connected to the terminal C and the terminal D of the RS485 interface are in the Hi-Z state;
   setting the receiver enable signal Re output from the receiver enable signal output terminal of the polarity determination circuit as valid, the output setting enable signal Se output from the output setting enable signal output terminal of the polarity determination circuit as invalid, and the output setting input signal SI output from the output setting input signal output terminal of the polarity determination circuit as any state, such that according to a polarity determination result Ps received by the receiver circuit, a voltage difference VR1-VR2 between an R1 input terminal and an R2 input terminal of the receiver circuit that are correspondingly connected to the terminal C and the terminal D of the RS485 interface, and a hysteretic region indication signal Hy output from a hysteretic region indication signal output terminal of the receiver circuit, the received data output signal RD output from the received data output signal output terminal of the receiver circuit is specifically as follows:
   if the voltage difference VR1-VR2 between the R1 input terminal and the R2 input terminal of the receiver circuit is unchanged, when the polarity determination result signal Ps output from the polarity determination circuit is inverted, the received data output signal RD output from the received data output signal output terminal of the receiver circuit is inverted, namely RD=R̅D̅;
   when the polarity determination result signal Ps output from the polarity determination circuit indicates that the polarities are normal, namely Ps=0: if the voltage difference VR1-VR2 between the R1 input terminal and the R2 input terminal of the receiver circuit is not less than a hysteresis voltage threshold Vh, the hysteretic region indication signal Hy output from the hysteretic region indication signal output terminal of the receiver circuit is invalid, and the received data output signal RD output from the received data output signal output terminal of the receiver circuit is 1; if the voltage difference VR1-VR2 between the R1 input terminal and the R2 input terminal of the receiver circuit is not greater than -Vh, the hysteretic region indication signal Hy output from the hysteretic region indication signal output terminal of the receiver circuit is invalid, and the received data output signal RD output from the received data output signal output terminal of the receiver circuit is 0; and if the voltage difference VR1-VR2 between the R1 input terminal and the R2 input terminal of the receiver circuit is less than Vh but greater than -Vh, the hysteretic region indication signal Hy output from the hysteretic region indication signal output terminal of the receiver circuit is valid, and the received data output signal RD output from the received data output signal output terminal of the receiver circuit is kept unchanged; and
   when the polarity determination result signal Ps output from the polarity determination circuit indicates that the polarities are opposite, namely Ps=1: if the voltage difference VR1-VR2 between the R1 input terminal and the R2 input terminal of the receiver circuit is not less than the hysteresis voltage threshold Vh, the hysteretic region indication signal Hy output from the hysteretic region indication signal output terminal of the receiver circuit is invalid, and the received data output signal RD output from the received data output signal output terminal of the receiver circuit is 0; if the voltage difference VR1-VR2 between the R1 input terminal and the R2 input terminal of the receiver circuit is not greater than -Vh, the hysteretic region indication signal Hy output from the hysteretic region indication signal output terminal of the receiver circuit is invalid, and the received data output signal RD output from the received data output signal output terminal of the receiver circuit is 1; and if the voltage difference VR1-VR2 between the R1 input terminal and the R2 input terminal of the receiver circuit is less than Vh but greater than -Vh, the hysteretic region indication signal Hy output from the hysteretic region indication signal output terminal of the receiver circuit is valid, and the received data output signal RD output from the received data output signal output terminal of the receiver circuit is kept unchanged; and
5) setting, for the driver circuit, the output enable signal Xe output from the output enable signal output terminal of the polarity determination circuit as invalid, such that both the driver output signal X1 output terminal and the driver output signal X2 output terminal of the driver circuit that are correspondingly connected to the terminal C and the terminal D of the RS485 interface are in the Hi-Z state;
   setting, for a test output circuit, if the transmitted data input signal XD received by the transmitted data input signal input terminal of the polarity determination circuit is 1, the test output enable signal Te output from the test output enable signal output terminal of the polarity determination circuit as invalid, such that both the test output signal T1 output terminal and the test output signal T2 output terminal of the test output circuit are in the Hi-Z state; setting, when the transmitted data input signal XD received by the transmitted data input signal input terminal of the polarity determination circuit is 0, and the polarity determination result signal Ps output from the polarity determination result signal output terminal of the polarity determination circuit is 1, the test output enable signal Te output from the test output enable signal output terminal of the polarity determination circuit as valid, such that a testing voltage Vt is output between the test output signal T1 output terminal and the test output signal T2 output terminal of the test output circuit; and setting, when the transmitted data input signal XD received by the transmitted data input signal input terminal of the polarity determination circuit is 0, and the polarity determination result signal Ps output from the polarity determination result signal output terminal of the polarity determination circuit is 0, the test output enable signal Te output from the test output enable signal output terminal as valid, such that a testing voltage -Vt is output between the test output signal T1 output terminal and the test output signal T2 output terminal of the test output circuit, where the testing voltage Vt is greater than the hysteresis voltage threshold Vh, and by accessing output voltages of the test output signal T1 output terminal and the test output signal T2 output terminal of the test output circuit to the terminal C and the terminal D of the RS485 interface, there is an output resistance more than 10 times greater than that of a case in which output voltages of the driver output signal X1 output terminal and the driver output signal X2 output terminal of the driver circuit are connected to the terminal C and the terminal D of the RS485 interface;
   setting, for the receiver circuit in an initial test state, the receiver enable signal Re output from the receiver enable signal output terminal of the polarity determination circuit as valid, the output setting enable signal Se output from the output setting enable signal output terminal of the polarity determination circuit as valid, and the output setting input signal SI output from the output setting input signal output terminal of the polarity determination circuit as 1, and initializing the received data output signal RD output from the received data output signal output terminal of the receiver circuit as 1, where upon completion of initialization, the hysteretic region indication signal Hy and the received data output signal RD are output as follows:
   if the voltage difference VR1-VR2 between the R1 input terminal and the R2 input terminal of the receiver circuit is unchanged, when the polarity determination result signal Ps output from the polarity determination circuit is inverted, the received data output signal RD output from the received data output signal output terminal of the receiver circuit is inverted, namely RD=R̅D̅;
   when the polarity determination result signal Ps output from the polarity determination circuit is kept at 0: if the voltage difference VR1-VR2 between the R1 input terminal and the R2 input terminal of the receiver circuit is not less than the hysteresis voltage threshold Vh, the hysteretic region indication signal Hy output from the hysteretic region indication signal output terminal of the receiver circuit is invalid, and the received data output signal RD output from the received data output signal output terminal of the receiver circuit is 1; if the voltage difference VR1-VR2 between the R1 input terminal and the R2 input terminal of the receiver circuit is not greater than -Vh, the hysteretic region indication signal Hy output from the hysteretic region indication signal output terminal of the receiver circuit is invalid, and the received data output signal RD output from the received data output signal output terminal of the receiver circuit is 0; and if the voltage difference VR1-VR2 between the R1 input terminal and the R2 input terminal of the receiver circuit is less than Vh but greater than -Vh, the hysteretic region indication signal Hy output from the hysteretic region indication signal output terminal of the receiver circuit is valid, and the received data output signal RD output from the received data output signal output terminal of the receiver circuit is kept unchanged; and
   when the polarity determination result signal Ps output from the polarity determination circuit is kept at 1: if the voltage difference VR1-VR2 between the R1 input terminal and the R2 input terminal of the receiver circuit is not less than the hysteresis voltage threshold Vh, the hysteretic region indication signal Hy output from the hysteretic region indication signal output terminal of the receiver circuit is invalid, and the received data output signal RD output from the received data output signal output terminal of the receiver circuit is 0; if the voltage difference VR1-VR2 between the R1 input terminal and the R2 input terminal of the receiver circuit is not greater than -Vh, the hysteretic region indication signal Hy output from the hysteretic region indication signal output terminal of the receiver circuit is invalid, and the received data output signal RD output from the received data output signal output terminal of the receiver circuit is 1; and if the voltage difference VR1-VR2 between the R1 input terminal and the R2 input terminal of the receiver circuit is less than Vh but greater than -Vh, the hysteretic region indication signal Hy output from the hysteretic region indication signal output terminal of the receiver circuit is valid, and the received data output signal RD output from the received data output signal output terminal of the receiver circuit is kept unchanged; and
   setting, for the timer circuit in the initial test state, the timer clearing signal CL output from the timer clearing signal output terminal of the polarity determination circuit as valid, such that the timer circuit is cleared to the zero, and the timer overflow indication signal OV output from the timer overflow indication signal output terminal of the timer circuit is invalid, where upon completion of initialization, the timer overflow indication signal OV is output as follows: when the received data output signal RD output from the received data output signal output terminal of the receiver circuit is 1, and the hysteretic region indication signal Hy output from the hysteretic region indication signal output terminal of the receiver circuit is invalid, the timer clearing signal CL output from the polarity determination circuit is set as valid, such that the timer circuit is cleared to the zero and the output timer overflow indication signal OV is invalid; when the received data output signal RD output from the received data output signal output terminal of the receiver circuit is 1, and the hysteretic region indication signal Hy output from the hysteretic region indication signal output terminal of the receiver circuit is valid, or when the received data output signal RD output from the received data output signal output terminal of the receiver circuit is 0, and the hysteretic region indication signal Hy output from the hysteretic region indication signal output terminal of the receiver circuit is in any state, the timer clearing signal CL output from the timer clearing signal output terminal of the polarity determination circuit is set as invalid, such that the timer circuit starts timing until preset timer overflow time Tov, the timer overflow indication signal OV output from the timer circuit is valid, and in this case, the polarity determination result signal Ps is output as follows:
   if the received data output signal RD output from the received data output signal output terminal of the receiver circuit is 0, and the hysteretic region indication signal Hy output from the hysteretic region indication signal output terminal of the receiver circuit is in any state, the polarity determination result signal Ps output from the polarity determination circuit is inverted, namely Ps=P̅s̅; if the received data output signal RD output from the received data output signal output terminal of the receiver circuit is 1, the receiver enable signal Re output from the polarity determination circuit is set as valid, the output setting enable signal Se is set as valid, and the output setting input signal SI is set as 0, such that the received data output signal RD of the receiver circuit is set as 0, and the polarity determination result signal Ps is kept unchanged, namely Ps=Ps; and meanwhile, the timer clearing signal CL output from the timer clearing signal output terminal of the polarity determination circuit is set as valid, such that the timer circuit is cleared to the zero; and then the timer clearing signal CL of the polarity determination circuit is set as invalid, such that the timer circuit re-starts timing.

In some embodiments, a method for detecting an open circuit of the RS485 interface includes:
step 1.1: setting the functional state setting input signal ST such that an RS485 interface circuit is in a shutdown state, and setting the transmitted data input signal XD as 0;
step 1.2: setting the functional state setting input signal ST such that the RS485 interface circuit is in the test state;
step 1.3: determining, if the present test time does not reach the timer overflow time Tov of the timer circuit, and the received data output signal RD received by the received data output signal input terminal of the polarity determination circuit is 1, that the RS485 interface is not open, and ending the detection; or otherwise, keeping on waiting; and
step 1.4: determining, if the present test time is greater than the timer overflow time Tov but less than time 2×Tov, and the received data output signal RD received by the received data output signal input terminal of the polarity determination circuit is 1, that the RS485 interface is not open, and ending the detection; and determining, if the received data output signal RD received by the received data output signal input terminal of the polarity determination circuit is 0, that the RS485 interface is open.

In some embodiments, a method for detecting a short circuit of the RS485 interface includes:
step 2.1: setting the functional state setting input signal ST such that the RS485 interface circuit is in the shutdown state, and setting the transmitted data input signal XD as 1;
step 2.2: setting the functional state setting input signal ST such that the RS485 interface circuit is in the test state; labeling, if determining that the received data output signal RD input from the received data output signal input terminal of the polarity determination circuit is kept unchanged in the timer overflow time Tov, the received data output signal RD of the polarity determination circuit as a received data output signal RD1, and going to step 2.3; and waiting, if determining that the received data output signal RD input from the received data output signal input terminal of the polarity determination circuit is changed in the timer overflow time Tov, no change in data of the RS485 interface, and going back to step 2.1;
step 2.3: labeling, if determining that the received data output signal RD input from the received data output signal input terminal of the polarity determination circuit is kept unchanged in the next timer overflow time Tov after waiting for the timer overflow time Tov, the received data output signal RD of the polarity determination circuit as a received data output signal RD2, and going to step 2.4; waiting, if the received data output signal RD is changed, no change in data of the RS485 interface, and going back to step 2.1; determining that the RS485 interface is not shorted, and ending the detection if RD1=RD2; determining that the RS485 interface is shorted if RD1=1, and RD2=0; and entering the next step if RD1=0, and RD2=1; and
step 2.4: labeling, if determining that the received data output signal RD input from the received data output signal input terminal of the polarity determination circuit is kept unchanged in the timer overflow time Tov after waiting for the timer overflow time Tov, the received data output signal RD of the polarity determination circuit as RD3; or otherwise, waiting for no change in data of the RS485 interface, and going back to step 2.1; determining that the RS485 interface is not shorted, and ending the detection if RD3=1; and determining that the RS485 interface is shorted, and ending the detection if RD3=0, and RD2=0.

In some embodiments, after the state of the RS485 interface is detected, a method for applying the RS485 interface to communication includes:
step 3.1: detecting the open circuit of the RS485 interface according to step 1.1 to step 1.4; shutting down, if determining that the RS485 interface is open, the RS485 interface and alarming; or otherwise, entering a next step;
step 3.2: detecting the short circuit of the RS485 interface according to step 2.1 to step 2.4; shutting down, if determining that the RS485 interface is short circuited, the RS485 interface and alarming; or otherwise, determining polarities of the RS485 interface, setting a correct polarity determination result Ps, and entering the next step; and
step 3.3: entering a normal communication state and setting the functional state setting input signal ST, such that the RS485 interface circuit enters an input state and receives a communication message; and setting the functional state setting input signal ST, such that the RS485 interface circuit enters an output state, and transmits a communication message.

The detection circuit and detection method for an access state of an RS485 interface provided by the present disclosure shuts down the RS485 interface, outputs the transmitted data, and inputs the received data when the RS485 interface circuit is in shutdown, output, and input states. When the RS485 interface circuit is in the output state, the received data output signal RD is always kept at the default level 1, thereby preventing an STSR situation. Therefore, an STSR message is unnecessarily further processed by the application program, and thus the application is simplified.

### BRIEF DESCRIPTION OF THE DRAWINGS

FIG. 1 illustrates an implementation solution of an existing non-polarized RS-RS485 interface circuit;
FIG. 2 illustrates a schematic diagram of a detection circuit for an access state of an RS485 interface according to an embodiment of the present disclosure;
FIG. 3 illustrates an input-output logic table for a driver circuit of an RS485 interface according to an embodiment of the present disclosure;
FIG. 4 illustrates an input-output logic table for a receiver circuit of an RS485 interface according to an embodiment of the present disclosure;
FIG. 5 illustrates an input-output logic table for a test output circuit of an RS485 interface according to an embodiment of the present disclosure;
FIG. 6 illustrates an operating state and an input-output logic table for a timer circuit of an RS485 interface according to an embodiment of the present disclosure; and
FIG. 7 illustrates an operating state and an input-output logic table for a polarity determination circuit of an RS485 interface according to an embodiment of the present disclosure.

### DETAILED DESCRIPTION OF THE EMBODIMENTS

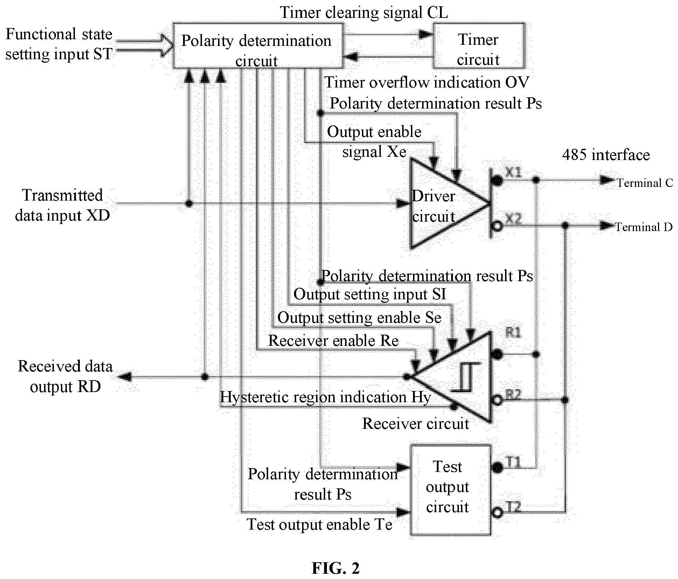

As shown in FIG. 2, a detection circuit for an access state of an RS485 interface provided by the present disclosure includes a polarity determination circuit, a timer circuit, a driver circuit, a receiver circuit, and a test output circuit.

A functional state setting signal ST input terminal of the polarity determination circuit is configured to input a functional state setting signal ST. A timer clearing signal CL output terminal of the polarity determination circuit is connected to a timer clearing signal CL input terminal of the timer circuit. A timer overflow indication signal OV input terminal of the polarity determination circuit is connected to a timer overflow indication signal OV output terminal of the timer circuit. A transmitted data input signal input terminal of the polarity determination circuit is configured to input a transmitted data input signal XD. A received data output signal input terminal of the polarity determination circuit is connected to a received data output signal RD output terminal of the receiver circuit. A transmitted data input signal input terminal of the driver circuit is configured to input the transmitted data input signal XD. A polarity determination result signal Ps input terminal of the driver circuit is connected to a polarity determination result signal Ps output terminal of the polarity determination circuit. An output enable signal Xe input terminal of the driver circuit is connected to an output enable signal Xe output terminal of the polarity determination circuit. The driver circuit includes a driver output signal X1 output terminal connected to an terminal C of the RS485 interface, and a driver output signal X2 output terminal connected to an terminal D of the RS485 interface. A polarity determination result signal Ps input terminal of the receiver circuit is connected to the polarity determination result signal Ps output terminal of the polarity determination circuit. An output setting input signal SI input terminal of the receiver circuit is connected to an output setting input signal SI output terminal of the polarity determination circuit. An output setting enable signal Se input terminal of the receiver circuit is connected to an output setting enable signal Se output terminal of the polarity determination circuit. A receiver enable signal Re input terminal of the receiver circuit is connected to a receiver enable signal Re output terminal of the polarity determination circuit. A hysteretic region indication signal Hy output terminal of the receiver circuit is connected to a hysteretic region indication signal Hy input terminal of the polarity determination circuit. A received input signal R1 input terminal of the receiver circuit is connected to the terminal C of the RS485 interface and the driver output signal X1 output terminal of the driver circuit. A received input signal R2 input terminal of the receiver circuit is connected to the terminal D of the RS485 interface and the driver output signal X2 output terminal of the driver circuit. The received data output signal RD output terminal of the receiver circuit is configured to output a received data output signal RD. A polarity determination result signal Ps input terminal of the test output circuit is connected to the polarity determination result signal Ps output terminal of the polarity determination circuit. A test output enable signal Te input terminal of the test output circuit is connected to a test output enable signal Te output terminal of the polarity determination circuit. A test output signal T1 output terminal of the test output circuit is connected to the terminal C of the RS485 interface and the driver output signal X1 output terminal of the driver circuit. A test output signal T2 output terminal of the test output circuit is connected to the terminal D of the RS485 interface and the driver output signal X2 output terminal of the driver circuit.

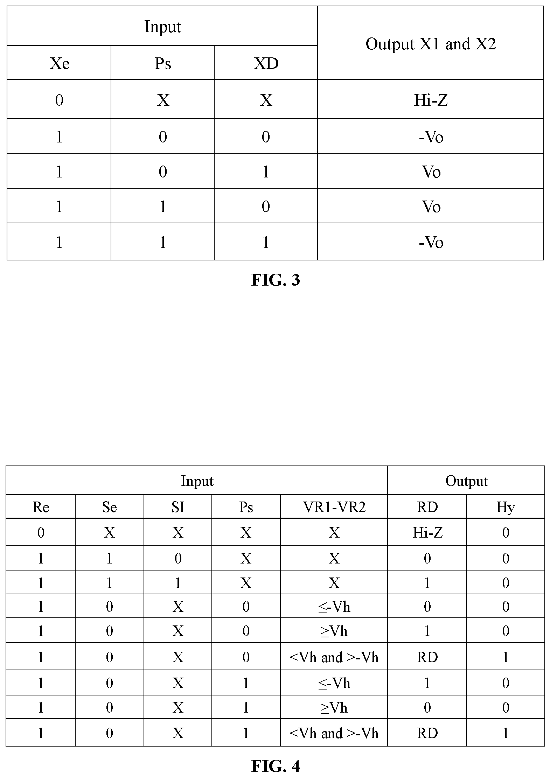

The driver circuit works according to requirements on a driving function of the RS485 interface. The driver circuit drives a differential output for the driver output signal X1 output terminal and the driver output signal X2 output terminal according to a received polarity determination result signal Ps and transmitted data input signal XD. As shown by an input-output logic table in FIG. 3, when the polarity determination result signal Ps indicates that polarities are normal, namely Ps=0: if the transmitted data input signal XD is 0, a negative voltage -Va is output between the driver output signal X1 output terminal and the driver output signal X2 output terminal. If the transmitted data input signal XD is 1, a positive voltage V₀ is output between the driver output signal X1 output terminal and the driver output signal X2 output terminal. When the polarity determination result signal Ps indicates that the polarities are opposite, namely Ps=1: if the transmitted data input signal XD is 0, the positive voltage V₀ is output between the driver output signal X1 output terminal and the driver output signal X2 output terminal. If the transmitted data input signal XD is 1, the negative voltage -Va is output between the driver output signal X1 output terminal and the driver output signal X2 output terminal. V₀ is a driving output voltage meeting an output voltage standard of the RS485 interface.

The receiver circuit works to identify a received input signal of the RS485 interface, and determine a hysteresis of an input voltage. An input signal of the receiver circuit includes the polarity determination result signal Ps, the output setting enable signal Se, the output setting input signal SI, the receiver enable signal Re, and the received input signals R1, R2 input from the RS485 interface. An output signal of the receiver circuit includes the received data output signal RD and the hysteretic region indication signal Hy. The receiver circuit has an input-output logic shown in FIG. 4. When the receiver enable signal Re=0, the receiver circuit is shut down, and the received data output signal RD is in a Hi-Z state. When the receiver enable signal Re=1, if the polarity determination result signal Ps indicates that the polarities are normal, namely Ps=0, and a voltage difference VR1-VR2 between the R1 input terminal and the R2 input terminal of the receiver circuit is not less than a hysteresis voltage threshold Vh, the received data output signal RD outputs 1. If the polarity determination result signal Ps=0, and the voltage difference VR1-VR2 between the R1 input terminal and the R2 input terminal of the receiver circuit is not greater than -Vh, the received data output signal RD outputs 0. If the voltage difference VR1-VR2 between the R1 input terminal and the R2 input terminal of the receiver circuit is less than Vh but greater than -Vh, the received data output signal RD is kept unchanged. When the receiver enable signal Re=1, if the polarity determination result signal Ps indicates that the polarities are opposite, namely Ps=1, and the voltage difference VR1-VR2 between the R1 input terminal and the R2 input terminal of the receiver circuit is not less than the hysteresis voltage threshold Vh, the received data output signal RD outputs 0. If the polarity determination result Ps=1, and the voltage difference VR1-VR2 between the R1 input terminal and the R2 input terminal of the receiver circuit is not greater than -Vh, the received data output signal RD outputs 1. If the voltage difference VR1-VR2 between the R1 input terminal and the R2 input terminal of the receiver circuit is less than Vh but greater than -Vh, the received data output signal RD is kept unchanged. When the receiver enable signal Re=1, the hysteretic region indication signal Hy is output as follows: When the difference between voltages VR1 and VR2 for received input signals R1 and R2 of the RS485 interface satisfies IVR1-VR21<Vh, the hysteretic region indication signal Hy outputs 1, Vh being the hysteresis voltage threshold between an terminal A and an terminal B of a corresponding RS485 interface; or otherwise, the hysteretic region indication signal Hy outputs 0.

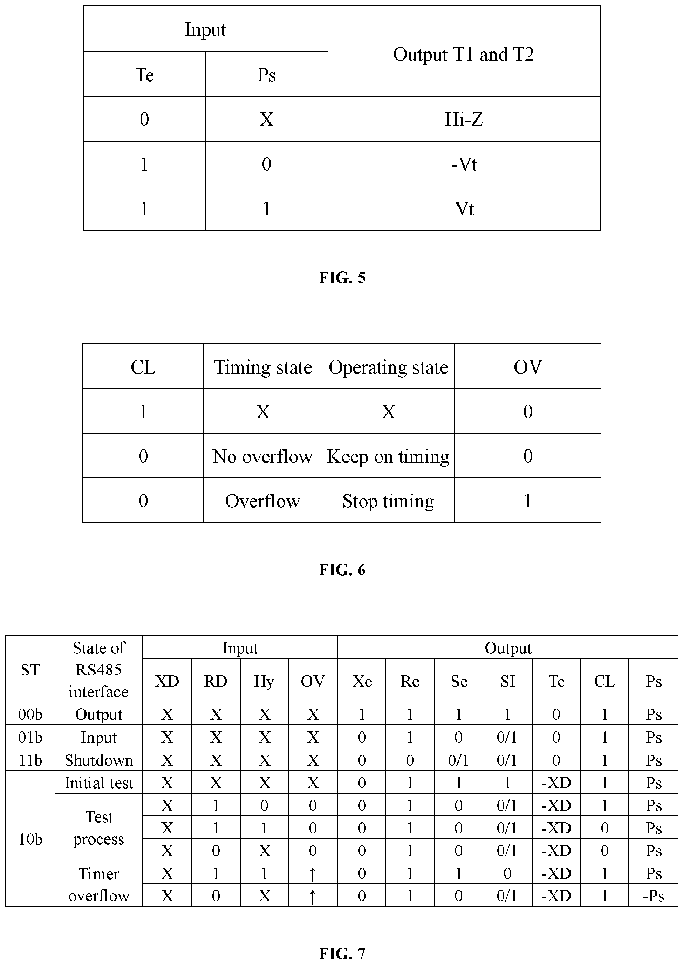

FIG. 5 illustrates an input-output logic table for the test output circuit according to an embodiment of the present disclosure. The test output circuit is dependent of the polarity determination result signal Ps and the test output enable signal Te: When the test output enable signal Te=1, and the polarity determination result signal Ps=0, the voltage difference between the test output signal T1 output terminal and the test output signal T2 output terminal of the test output circuit is -Vt. When the test output enable signal Te=1, and the polarity determination result signal Ps=1, the voltage difference between the test output signal T1 output terminal and the test output signal T2 output terminal of the test output circuit is Vt. Vt is an output voltage in an open circuit of an impeder accessed to the test output circuit, and this voltage is greater than the hysteresis voltage threshold Vh. The test output signal T1 output terminal and the test output signal T2 output terminal of the test output circuit are correspondingly connected to the terminal C and the terminal D of the RS485 interface, such that the output resistance of the test output circuit is more than 10 times greater than that of the driver circuit.

FIG. 6 illustrates an operating state and an input-output logic table of the timer circuit according to an embodiment of the present disclosure. When the timer clearing signal CL is 1, the timer circuit is cleared to zero, and the timer overflow indication signal OV outputs 0. When the timer clearing signal CL is 1, namely there is no overflow of the timer circuit, the timer circuit keeps on timing, and the timer overflow indication signal OV outputs 0. When the timer clearing signal CL is 1, namely there is the overflow of the timer circuit, the timer circuit stops timing, and the timer overflow indication signal OV outputs 1. Time of the timer circuit from zero clearing to timer overflow is considered as Tov.

In an embodiment of the present disclosure, there are a shutdown state, an output state, an input state, and a test state in terms of the functional state setting input signal ST input from the polarity determination circuit.

When the functional state setting input signal ST=11b, the corresponding RS485 interface is shut down. Regardless of values of the transmitted data input signal XD, the received data output signal RD, the hysteretic region indication signal Hy, and the timer overflow indication signal OV, the polarity determination circuit outputs the output enable signal Xe=0, the driver circuit has a Hi-Z output. The polarity determination circuit outputs the receiver enable signal Re=0, the output setting enable signal Se and the output setting input signal SI that are output from the polarity determination circuit are set as any value, and the receiver circuit is shut down, with the output received data output signal RD in the Hi-Z state. The polarity determination circuit outputs the test output enable signal Te=0, the test output circuit has an Hi-Z output. The polarity determination circuit outputs the timer clearing signal CL=1, the timer circuit is cleared to zero. Ps=Ps, the polarity determination result signal Ps is kept unchanged.

When the functional state setting input signal ST=00b, the corresponding RS485 interface enters the output state. Regardless of values of the transmitted data input signal XD, the received data output signal RD, the hysteretic region indication signal Hy, and the timer overflow indication signal OV, the polarity determination circuit outputs the output enable signal Xe=1, the driver circuit drives the terminal C and the terminal D of the RS485 interface according to an input polarity determination result signal Ps and transmitted data input signal XD; the receiver enable signal Re=1, the output setting enable signal Se=1, the output setting input signal SI=1, and the received data output signal RD=1; the test output enable signal Te=0, the test output signal T1 output terminal and the test output signal T2 output terminal of the test output circuit are in a Hi-Z state; the timer clearing signal CL=1, the timer circuit is cleared to zero, and Ps=Ps, the polarity determination result signal Ps is kept unchanged.

When the functional state setting input signal ST=01b, the corresponding RS485 interface enters the input state. Regardless of values of the transmitted data input signal XD, the received data output signal RD, the hysteretic region indication signal Hy, and the timer overflow indication signal OV, the polarity determination circuit outputs the output enable signal Xe=0, the driver output signal X1 output terminal and the driver output signal X2 output terminal of the driver circuit are in a Hi-Z state. The polarity determination circuit outputs the receiver enable signal Re=0, the output setting enable signal Se and the output setting input signal SI are set as any value, and the receiver circuit generates the received data output signal RD according to the polarity determination result signal Ps. The polarity determination circuit outputs the test output enable signal Te=0, the test output circuit has the Hi-Z output. The polarity determination circuit outputs the timer clearing signal CL=1, the timer circuit is cleared to zero. Ps=Ps, the polarity determination result signal Ps is kept unchanged.

When the functional state setting input signal ST=10b, the corresponding RS485 interface enters the test state. The test state includes an initial test process, a formal test process, and a timer overflow process. In these three processes, the polarity determination circuit outputs the output enable signal Xe=0, the driver circuit has the Hi-Z output. The polarity determination circuit outputs the test output enable signal Te=-XD, which is divided into two cases: case 1: when the transmitted data output signal XD=1, the polarity determination circuit outputs the test output enable signal Te=0, and the test output circuit has the Hi-Z output; and case 2: when the transmitted data output signal XD=0, the polarity determination circuit outputs the test output enable signal Te=1, and the test output circuit outputs a testing voltage according to the polarity determination result signal Ps.

In the initial test process, the polarity determination circuit outputs the receiver enable signal Re=1, the output setting enable signal Se=1, the output setting input signal SI=1, and the received data output signal RD=1. The polarity determination circuit outputs the test output enable signal Te=0, the test output circuit has the Hi-Z output; the timer clearing signal CL=1, the timer circuit is cleared to the zero; and Ps=Ps, the polarity determination result signal Ps is kept unchanged.

In the formal test process, namely the timer circuit has the timer overflow indication signal OV=0, there are three cases:
Case 1: If the received data output signal RD=1, and the hysteretic region indication signal Hy=0, the timer clearing signal CL=1, the timer circuit is cleared to the zero, and Ps=Ps, the polarity determination result signal Ps is kept unchanged.
Case 2: If the received data output signal RD=1, and the hysteretic region indication signal Hy=1, the timer clearing signal CL=0, the timer circuit starts timing, and Ps=Ps, the polarity determination result signal Ps is kept unchanged.
Case 3: If the received data output signal RD=0, regardless of the value of the hysteretic region indication signal Hy, the timer clearing signal CL=0, the timer circuit starts timing, and Ps=Ps, the polarity determination result signal Ps is kept unchanged.

In the above three cases, the receiver enable signal Re=1, the output setting enable signal Se=0, the output setting input signal SI is in any state, the setting of the received data output signal RD is disabled, and according to the voltage difference VR1-VR2, the received data output is enabled.

In the timer overflow process, namely the timer overflow indication signal OV is changed from 0 to 1, there are two cases: case 1: if the received data output signal RD=1, and the hysteretic region indication signal Hy=1, the timer clearing signal CL=1, the timer circuit is cleared to the zero, the receiver enable signal Re=1, the output setting enable signal Se=1, and the output setting input signal SI=0. Therefore, the received data output signal RD of the receiver circuit is set as 0, and Ps=Ps, the polarity determination result signal Ps is kept unchanged.

Case 2: If the received data output signal RD=0, regardless of the value of the hysteretic region indication signal Hy, the timer clearing signal CL=1, the timer circuit is cleared to the zero, Ps=-Ps, the polarity determination result Ps is inverted, and the inverted received data output signal RD is 1.

Based on the detection circuit of the present disclosure, a method for detecting an open circuit of the RS485 interface includes:
Step 1.1: Set the functional state setting input signal ST=11b such that the RS485 interface circuit is in the shutdown state, and set the transmitted data input signal XD as 1.
Step 1.2: Set the functional state setting input signal ST=10b such that the RS485 interface circuit is in the test state.
Step 1.3: Determine, if test time does not reach the timer overflow time Tov, and the received data output signal RD=1, that the RS485 interface is not open, and end the detection; or otherwise, keep on waiting.
Step 1.4: Determine, if the test time is greater than the timer overflow time Tov but less than time 2×Tov, and the received data output signal RD=1, that the RS485 interface is not open, and end the detection; or otherwise, determine that the RS485 interface is open.

Based on the detection circuit of the present disclosure, a method for detecting a short circuit of the RS485 interface includes:
Step 2.1: Set the functional state setting input signal ST=11b such that the RS485 interface circuit is in the shutdown state, and set the transmitted data input signal XD as 1.
Step 2.2: Set the functional state setting input signal ST=10b such that the RS485 interface circuit is in the test state, determine whether the received data output signal RD of the polarity determination circuit is kept unchanged in the timer overflow time Tov, label the received data output signal RD as RD1 if yes, and if no, wait no continuous change in data of the RS485 interface in the time Tov, and go back to Step 2.1.
Step 2.3: Check whether the received data output signal RD of the polarity determination circuit is kept unchanged in the timer overflow time Tov after waiting for the timer overflow time Tov, label the received data output signal RD as RD2 if yes, and if no, wait no continuous change in data of the RS485 interface in the time Tov, and go back to Step 2.1; further determine whether RD1=RD2 through the polarity determination circuit; determine that the RS485 interface is not shorted and end the detection if yes; determine that the RS485 interface is shorted if RD1=1, and RD2=0; and enter a next step if RD1=0, and RD2=1.
Step 2.4: Check whether the received data output signal RD of the polarity determination circuit is kept unchanged in the timer overflow time Tov after waiting for the timer overflow time Tov, label the received data output signal RD as RD3 if yes, and if no, wait no continuous change in data of the RS485 interface in the time Tov, and go back to Step 2.1; determine that the RS485 interface is not shorted, and end the detection if RD3=1; and determine that the RS485 interface is shorted, and end the detection if RD3=0, and RD2=0.

Based on the detection circuit of the present disclosure, after the state of the RS485 interface is detected, a method for starting the RS485 interface for a communication includes:
Step 3.1: Detect the open circuit of the RS485 interface according to Step 1.1 to Step 1.4; shut down, if determining that the RS485 interface is open, the RS485 interface and alarm; or otherwise, enter a next step.
Step 3.2: Detect the short circuit of the RS485 interface according to Step 2.1 to Step 2.4; shut down, if determining that the RS485 interface is short circuited, the RS485 interface and alarm; or otherwise, determine polarities of the RS485 interface, a set value of the polarity determination result Ps satisfying that the received data output signal RD of the RS485 interface is 1 in case of no data, and enter a next step.
Step 3.3: Enter a normal communication state, and set the functional state setting input signal ST=01b, such that the RS485 interface circuit enters the input state, and receives a communication message; and set the functional state setting input signal ST=00b, such that the RS485 interface circuit enters the output state, and transmits the communication message.

When the RS485 interface circuit is in the shutdown, output and input states, the RS485 interface is shut down, outputs the transmitted data, and inputs the received data. When the RS485 interface circuit is in the output state, the received data output signal RD is always kept at the default level 1, thereby preventing an STSR situation. Therefore, an STSR message is unnecessarily further processed by the application program, and thus the application is simplified.

To test functional states in the present disclosure, a non-polarized access can be implemented based on a polarity detection circuit. The polarity detection and the non-polarized access have a following working principle: When the transmitted data input signal XD of the RS485 interface is set as 1 in the test mode, both the driver circuit and the test output circuit have the Hi-Z output. In case of no data operating at the RS485 interface, when the voltage at the terminal C is higher than that at the terminal D and there are no received and transmitted data, the RS485 communication terminal as a master node keeps the received data output signal RD at 1 according to an RS485 interface standard. If the received data output signal RD is 0, it is determined that present polarities are opposite. According to the circuit and the method in the present disclosure, the present polarity determination result Ps is inverted after the timer overflow time Tov in the test mode, and the received data output signal RD outputs 1. Thereafter, when entering a normal RS485 data receiving or transmitting mode, the RS485 interface can implement normal communication according to the correct polarity determination result signal Ps.

The principle for detecting the open circuit is as follows: When the transmitted data input signal XD is set as 0 in the test state, the test output circuit outputs the testing voltage between the terminal C and the terminal D of the RS485 interface. Due to the large output resistance of the test output circuit accessed to the RS485 interface, if other nodes are accessed to the RS485 interface, the testing voltage of the test output circuit does not affect driving voltages of the other nodes on the interface. However, when the RS485 interface is open, the testing voltage output from the test output circuit is valid. In this case, regardless of the value of the polarity determination result signal Ps, the received data output signal RD outputs 0. When the timer circuit reaches the overflow time Tov, the polarity determination result signal Ps is inverted. After the polarity determination result signal Ps is inverted, the testing voltage output from the test output circuit is also inverted, and thus the received data output signal RD still outputs 0. The above phenomenon is different from a case where the received data output signal RD is changed as 1 after an external driver is connected to the normal RS485 interface. Hence, if the received data output signal RD outputs 0 after the timer overflow time Tov, it can be determined that the RS485 interface is open.

The principle for detecting the short circuit is as follows: When the transmitted data input signal XD is set as 1 in the test state, both the test output signal T1 output terminal and the test output signal T2 output terminal of the test output circuit are in the Hi-Z state. If the RS485 interface is connected normally, regardless of whether the initial polarity determination result signal Ps outputs normally, the received data output signal RD is kept at 1 after the timer overflow time Tov. However, if the RS485 interface is shorted, and the hysteretic region indication signal Hy of the receiver circuit outputs 1, when the received data output signal RD is 0, the polarities are determined at a time after the timer overflow time Tov, the polarity determination result signal Ps is inverted, and the received data output signal is inverted to 1. When the received data output signal RD is 1, the received data output signal RD of the receiver circuit is set as 0 after the timer overflow time Tov through the output setting enable signal Se=1 and the output setting input signal SI=0 output by the polarity determination circuit. Therefore, if the RS485 interface is shorted, the level of the received data output signal RD is inverted after the timer overflow time Tov. Therefore, in case of no open circuit, no shorted circuit, and no data reception of the RS485 interface, the received data output signal RD is 1 after the timer overflow time Tov. If the received data output signal RD is changed from 1 to 0, and there are no data transmitted on the RS485 interface, it can be determined that the RS485 interface is shorted. Meanwhile, according to the working principles of the polarity detection and the non-polarized access, when the RS485 interface is not shorted and open, the polarity determination result Ps is also set for normal communication.

The method can detect the electrical interface of the RS485 device in the linked state, thereby implementing automatic identification of the device accessed to an Internet of things (IoT) based on the RS485.

The above merely describes specific implementations of the present disclosure, but the scope of protection is defined by

## Claims

1. A detection method for handling
an access state of an RS485 interface, comprising
1) determining whether a functional state setting signal (ST) input from a functional state setting signal input terminal of a polarity determination circuit is a shutdown signal, an output signal, an input signal, or a test signal; going to step 2) in response to the shutdown signal; going to step 3) in response to the output signal; going to step 4) in response to the input signal, and going to step 5) in response to the test signal;
2) keeping a polarity determination result signal (Ps) output from a polarity determination result signal output terminal of the polarity determination circuit unchanged;
setting a timer clearing signal (CL) output from a timer clearing signal output terminal of the polarity determination circuit as valid, such that a timer circuit is cleared to zero, and a timer overflow indication signal (OV) output from a timer overflow indication signal output terminal of the timer circuit is invalid;
setting a receiver enable signal (Re) output from a receiver enable signal output terminal of the polarity determination circuit as invalid, an output setting input signal (SI) output from an output setting input signal output terminal of the polarity determination circuit as any state, and an output setting enable signal (Se) output from an output setting enable signal output terminal of the polarity determination circuit as any state, thereby controlling a received data output signal (RD) output from a received data output signal output terminal of a receiver circuit in a high-impedance, Hi-Z, state;
setting an output enable signal (Xe) output from an output enable signal output terminal of the polarity determination circuit as invalid, such that both an output terminal for a first driver output signal (X1) and an output terminal for a second driver output signal (X2) of a driver circuit are in a Hi-Z state; and
setting a test output enable signal (Te) output from a test output enable signal output terminal of the polarity determination circuit as invalid, such that both an output terminal for a first test output signal (T1) and an output terminal for a second test output signal (T2) of a test circuit are in a Hi-Z state;
3) keeping the polarity determination result signal (Ps); setting the timer clearing signal (CL) as valid, such that the timer circuit is cleared to the zero, and the timer overflow indication signal output terminal of the timer circuit outputs the timer overflow indication signal (OV); and setting the receiver enable signal (Re) as valid, the output setting enable signal (Se) as valid, the output setting input signal (SI) as 1, and the received data output signal (RD) as a default 1; setting the test output enable signal (Te) as invalid, such that both the output terminal for the first test output signal (T1) and the output terminal for the second test output signal (T2) of the test circuit are in the Hi-Z state; and setting the output enable signal (Xe) as valid, such that the driver circuit drives a differential output on the output terminal for the first driver output signal (X1) and the output terminal for the second driver output signal (X2) according to the polarity determination result signal (Ps) received by the driver circuit and a transmitted data input signal (XD) with a following output rule:
when the polarity determination result signal (Ps) indicates that polarities are normal, namely a value of the polarity determination result signal (Ps) is 0: if the transmitted data input signal (XD) is 0, a negative voltage -Va is output between the output terminal for the first driver output signal (X1) and the output terminal for the second driver output signal (X2) of the driver circuit; and if the transmitted data input signal (XD) is 1, a positive voltage V₀ is output between the output terminal for the first driver output signal (X1) and the output terminal for the second driver output signal (X2) of the driver circuit;
when the polarity determination result signal (Ps) indicates that the polarities are opposite, namely the polarity determination result signal (Ps) is 1: if the transmitted data input signal (XD) is 0, the positive voltage V₀ is output between the output terminal for the first driver output signal (X1) and the output terminal for the second driver output signal (X2) of the driver circuit; and if the transmitted data input signal (XD) is 1, the negative voltage -Va is output between the output terminal for the first driver output signal (X1) and the output terminal for the second driver output signal (X2) of the driver circuit, the positive voltage V₀ being a voltage satisfying an output voltage standard of the RS485 interface;
4) keeping the polarity determination result signal (Ps) output from the polarity determination circuit unchanged; and setting the timer clearing signal (CL) output from the timer clearing signal output terminal of the polarity determination circuit as valid, such that the timer circuit is cleared to the zero, and the timer overflow indication signal (OV) output from the timer overflow indication signal output terminal of the timer circuit is invalid;
setting the output enable signal (Xe) as invalid, such that both the output terminal for the first driver output signal (X1) and the output terminal for the second driver output signal (X2) of the driver circuit that are correspondingly connected to a first terminal (C) and a second terminal (D) of the RS485 interface are in the Hi-Z state;
setting the test output enable signal (Te) as invalid, such that both the output terminal for the first test output signal (T1) and the output terminal for the second test output signal (T2) of the test circuit that are correspondingly connected to the first terminal (C) and the second terminal (D) of the RS485 interface are in the Hi-Z state;
setting the receiver enable signal (Re) as valid, the output setting enable signal (Se) as invalid, and the output setting input signal (SI) as any state, such that according to the polarity determination result signal (Ps) received by the receiver circuit, a voltage difference VR1-VR2 between an input terminal for a first received input signal (R1) and an input terminal for a second received input signal (R2) of the receiver circuit that are correspondingly connected to the first terminal (C) and the second terminal (D) of the RS485 interface, and a hysteretic region indication signal (Hy) output from a hysteretic region indication signal output terminal of the receiver circuit, the received data output signal (RD) output from the received data output signal output terminal of the receiver circuit is specified as follows:
if the voltage difference VR1-VR2 between the input terminal for first received input signal (R1) and the input terminal for second received input signal (R2) of the receiver circuit is unchanged, when the polarity determination result signal (Ps) output from the polarity determination circuit is inverted, the received data output signal (RD) is inverted;
when the polarity determination result signal (Ps) indicates that the polarities are normal, namely the polarity determination result signal (Ps) is 0: if the voltage difference VR1-VR2 is not less than a hysteresis voltage threshold (Vh),
the hysteretic region indication signal (Hy) is invalid, and the received data output signal (RD) is 1; if the voltage difference VR1-VR2 is not greater than -Vh, the hysteretic region indication signal (Hy) is invalid, and the received data output signal (RD) cirruftis 0; and if the voltage difference VR1-VR2 is less than Vh but greater than -Vh, the hysteretic region indication signal (Hy) is valid, and the received data output signal (RD) is kept unchanged; and
when the polarity determination result signal (Ps) indicates that the polarities are opposite, namely the polarity determination result signal (Ps) is 1: if the voltage difference VR1-VR2 is not less than the hysteresis voltage threshold Vh, the hysteretic region indication signal (Hy) is invalid, and the received data output signal (RD) is 0; if the voltage difference VR1-VR2 is not greater than -Vh, the hysteretic region indication signal (Hy) is invalid, and the received data output signal (RD) is 1; and if the voltage difference VR1-VR2 is less than Vh but greater than -Vh, the hysteretic region indication signal (Hy) is valid, and the received data output signal (RD) is kept unchanged; and
5) setting, for the driver circuit, the output enable signal (Xe) as invalid, such that both the output terminal for the first driver output signal (X1) and the output terminal for the second driver output signal (X2) of the driver circuit that are correspondingly connected to the first terminal (C) and the second terminal (D) of the RS485 interface are in the Hi-Z state;
setting, for a test output circuit, if the transmitted data input signal (XD) received by the transmitted data input signal input terminal of the polarity determination circuit is 1, the test output enable signal (Te) as invalid, such that both the output terminal for the first test output signal (T1) and the output terminal for the second test output signal (T2) of the test output circuit are in the Hi-Z state; setting, when the transmitted data input signal (XD) received by the transmitted data input signal input terminal of the polarity determination circuit is 0, and the polarity determination result signal (Ps) is 1, the test output enable signal (Te) as valid, such that a testing voltage Vt is output between the output terminal for the first test output signal (T1) and the output terminal for the second test output signal (T2) of the test output circuit; and setting, when the transmitted data input signal (XD) is 0, and the polarity determination result signal (Ps) is 0, the test output enable signal (Te) as valid, such that a testing voltage -Vt is output between the output terminal for the first test output signal (T1) and the output terminal for the second test output signal (T2) of the test output circuit
wherein the testing voltage Vt is greater than the hysteresis voltage threshold Vh, and by accessing output voltages of the output terminal for first test output signal (T1) and the output terminal for second test output signal (T2) of the test output circuit to the first terminal (C) and the second terminal (D) of the RS485 interface, there is an output resistance more than 10 times greater than that of a case in which output voltages of the output terminal for first driver output signal (X1) and the output terminal for second driver output signal (X2) of the driver circuit are connected to the first terminal (C) and the second terminal (D) of the RS485 interface;
setting, for the receiver circuit in an initial test state, the receiver enable signal (Re) as valid, the output setting enable signal (Se) as valid, and the output setting input signal (SI) as 1, and initializing the received data output signal (RD) as 1, wherein upon completion of initialization, the hysteretic region indication signal (Hy) and the received data output signal (RD) are output as follows:
if the voltage difference VR1-VR2 between the input terminal for the first received input signal (R1) and the input terminal for the second received input signal (R2) of the receiver circuit is unchanged, when the polarity determination result signal (Ps) is inverted, the received data output signal (RD) is inverted;
when the polarity determination result signal (Ps) is kept at 0: if the voltage difference VR1-VR2 is not less than the hysteresis voltage threshold Vh, the hysteretic region indication signal (Hy) is invalid, and the received data output signal (RD) is 1; if the voltage difference VR1-VR2 is not greater than -Vh, the hysteretic region indication signal (Hy) is invalid, and the received data output signal (RD) is 0; and if the voltage difference VR1-VR2 is less than Vh but greater than -Vh, the hysteretic region indication signal (Hy) is valid, and the received data output signal (RD) is kept unchanged; and
when the polarity determination result signal (Ps) is kept at 1: if the voltage difference VR1-VR2 is not less than the hysteresis voltage threshold Vh, the hysteretic region indication signal (Hy) output from the hysteretic region indication signal output terminal of the receiver circuit is invalid, and the received data output signal (RD) is 0; if the voltage difference VR1-VR2 is not greater than -Vh, the hysteretic region indication signal (Hy) is invalid, and the received data output signal (RD) is 1; and if the voltage difference VR1-VR2 is less than Vh but greater than -Vh, the hysteretic region indication signal (Hy) is valid, and the received data output signal (RD) is kept unchanged; and
setting, for the timer circuit in the initial test state, the timer clearing signal (CL) as valid, such that the timer circuit is cleared to the zero, and the timer overflow indication signal (OV) is invalid, wherein upon completion of initialization, the timer overflow indication signal (OV) is output as follows: when the received data output signal (RD) is 1, and the hysteretic region indication signal (Hy) is invalid, the timer clearing signal (CL) is set as valid, such that the timer circuit is cleared to the zero and the output timer overflow indication signal (OV) is invalid; when the received data output signal (RD) is 1, and the hysteretic region indication signal (Hy) is valid, or when the received data output signal (RD) is 0, and the hysteretic region indication signal (Hy) is in any state, the timer clearing signal (CL) is set as invalid, such that the timer circuit starts timing until preset timer overflow time Tov, the timer overflow indication signal (OV) is valid, and in this case, the polarity determination result signal (Ps) is output as follows:
if the received data output signal (RD) is 0, and the hysteretic region indication signal (Hy) is in any state, the polarity determination result signal is inverted; if the received data output signal (RD) is 1, the receiver enable signal (Re) is set as valid, the output setting enable signal (Se) is set as valid, and the output setting input signal (SI) is set as 0, such that the received data output signal (RD) of the receiver circuit is set as 0, and the polarity determination result signal (Ps) is kept unchanged;
and meanwhile, the timer clearing signal (CL) is set as valid, such that the timer circuit is cleared to the zero; and then the timer clearing signal (CL) of the polarity determination circuit is set as invalid, such that the timer circuit re-starts timing.

2. The detection method for handling an access state of an RS485 interface according to claim 1, further comprising for detecting an open circuit of the RS485 interface:
step 1.1: setting the inputted functional state setting signal (ST) such that an RS485 interface circuit is in a shutdown state, and setting the transmitted data input signal (XD) to 0;
step 1.2: setting the inputted functional state setting signal (ST) such that the RS485 interface circuit is in the test state;
step 1.3: determining, if present test time does not reach the timer overflow time Tov of the timer circuit, and the received data output signal (RD) received by the received data output signal input terminal of the polarity determination circuit is 1, that the RS485 interface is not open, and ending the detection; or otherwise, keeping on waiting; and
step 1.4: determining, if the present test time is greater than the timer overflow time Tov but less than time 2×Tov, and the received data output signal (RD) received by the received data output signal input terminal of the polarity determination circuit is 1, that the RS485 interface is not open, and ending the detection; and determining, if the received data output signal (RD) received by the received data output signal input terminal of the polarity determination circuit is 0, that the RS485 interface is open.

3. The detection method for handling an access state of an RS485 interface according to claim 2, further comprising for detecting a short circuit of the RS485 interface:
step 2.1: setting the inputted functional state setting signal (ST) such that the RS485 interface circuit is in the shutdown state, and setting the transmitted data input signal (XD) as 1;
step 2.2: setting the inputted functional state setting signal (ST) such that the RS485 interface circuit is in the test state; labeling, if determining that the received data output signal (RD) received by the received data output signal input terminal of the polarity determination circuit is kept unchanged in the timer overflow time Tov, the received data output signal (RD) received by the polarity determination circuit as a first received data output signal (RD1), and going to step 2.3; and waiting, if determining that the received data output signal (RD) received by the received data output signal input terminal of the polarity determination circuit is changed in the timer overflow time Tov, no change in data of the RS485 interface, and going back to step 2.1;
step 2.3: labeling, if determining that the received data output signal (RD) received by the received data output signal input terminal of the polarity determination circuit is kept unchanged in the next timer overflow time Tov after waiting for the timer overflow time Tov, the received data output signal (RD) received by the polarity determination circuit as a second received data output signal (RD2), and going to step 2.4; waiting, if the received data output signal (RD) is changed, no change in data of the RS485 interface, and going back to step 2.1; determining that the RS485 interface is not shorted, and ending the detection if the first received data output signal (RD1) is equal to the second received data output signal (RD2); determining that the RS485 interface is shorted if the first received data output signal (RD1) is1, and the second received data output signal (RD2) is 0; and entering the next step if the first received data output signal (RD1) is 0, and the second received data output signal (RD2) is1; and
step 2.4: labeling, if determining that the received data output signal (RD) received by the received data output signal input terminal of the polarity determination circuit is kept unchanged in the timer overflow time Tov after waiting for the timer overflow time Tov, the received data output signal (RD) received by the polarity determination circuit as a third received data output signal (RD3); or otherwise, waiting for no change in data of the RS485 interface, and going back to step 2.1; determining that the RS485 interface is not shorted, and ending the detection if the third received data output signal (RD3) is1; and determining that the RS485 interface is shorted, and ending the detection if the third received data output signal (RD3) is0, and the second received data output signal (RD2) is0.

4. The detection method for handling an access state of an RS485 interface according to claim 3, wherein after the state of the RS485 interface is detected, the method further comprises for applying the RS485 interface to a communication:
step 3.1: detecting the open circuit state of the RS485 interface according to step 1.1 to step 1.4; shutting down, if determining that the RS485 interface is an open circuit, the RS485 interface and alarming; or otherwise, entering the next step;
step 3.2: detecting the short circuit state of the RS485 interface according to step 2.1 to step 2.4; shutting down, if determining that the RS485 interface is short circuited, the RS485 interface and alarming; or otherwise, determining polarities of the RS485 interface, setting a correct polarity determination result, and entering the next step; and
step 3.3: entering a normal communication state, and setting the inputted functional state setting signal (ST), such that the RS485 interface circuit enters an input state and receives a communication message; and setting the inputted functional state setting signal (ST), such that the RS485 interface circuit enters an output state and transmits a communication message.

5. A detection circuit configured for carrying out the detection method according to any one of claims 1 to 4, comprising the polarity determination circuit, the timer circuit, the driver circuit, the receiver circuit, and the test output circuit, wherein
the functional state setting signal input terminal of the polarity determination circuit is configured to input a functional state setting signal (ST);
the timer clearing signal output terminal of the polarity determination circuit is connected to a timer clearing signal input terminal of the timer circuit;
a timer overflow indication signal input terminal of the polarity determination circuit is connected to the timer overflow indication signal output terminal of the timer circuit;
the transmitted data input signal input terminal of the polarity determination circuit is configured to input the transmitted data input signal (XD);
the received data output signal input terminal of the polarity determination circuit is connected to the received data output signal output terminal of the receiver circuit;
the transmitted data input signal input terminal of the driver circuit is configured to input the transmitted data input signal (XD);
a polarity determination result signal input terminal of the driver circuit is connected to the polarity determination result signal output terminal of the polarity determination circuit;
an output enable signal input terminal of the driver circuit is connected to the output enable signal output terminal of the polarity determination circuit;
the driver circuit comprises the output terminal for first driver output signal (X1) connected to the first terminal (C) of the RS485 interface, and the output terminal for second driver output signal (X2) connected to a second terminal (D) of the RS485 interface;
a polarity determination result signal input terminal of the receiver circuit is connected to the polarity determination result signal output terminal of the polarity determination circuit;
an output setting input signal input terminal of the receiver circuit is connected to the output setting input signal output terminal of the polarity determination circuit;
an output setting enable signal input terminal of the receiver circuit is connected to the output setting enable signal output terminal of the polarity determination circuit;
a receiver enable signal input terminal of the receiver circuit is connected to the receiver enable signal output terminal of the polarity determination circuit;
the hysteretic region indication signal output terminal of the receiver circuit is connected to a hysteretic region indication signal input terminal of the polarity determination circuit;
the input terminal for first received input signal (R1) of the receiver circuit is connected to the first terminal (C) of the RS485 interface and the output terminal for first driver output signal (X1) of the driver circuit;
an input terminal for second received input signal (R2) of the receiver circuit is connected to the second terminal (D) of the RS485 interface and the output terminal for second driver output signal (X2) of the driver circuit;
the received data output signal output terminal of the receiver circuit is configured to output a received data output signal (RD);
a polarity determination result signal input terminal of the test output circuit is connected to the polarity determination result signal output terminal of the polarity determination circuit;
a test output enable signal input terminal of the test output circuit is connected to the test output enable signal output terminal of the polarity determination circuit;
the output terminal for first test output signal (T1) of the test output circuit is connected to the first terminal (C) of the RS485 interface and the output terminal for first driver output signal (X1) of the driver circuit; and
the output terminal for second test output signal (T2) of the test output circuit is connected to the second terminal (D) of the RS485 interface and the output terminal for second driver output signal (X2) of the driver circuit.

## Patentansprüche

1. Ein Detektionsverfahren zum Handhaben eines Zugriffszustands einer RS485-Schnittstelle, umfassend:
1) Bestimmen, ob ein Funktionszustands-Einstellungssignal, ST, das von einem Funktionszustands-Einstellungssignal-Eingangsanschluss einer Polaritätsbestimmungsschaltung eingegeben wird, ein Abschaltsignal, ein Ausgangssignal, ein Eingangssignal oder ein Testsignal ist; Weitergehen zu Schritt 2) ansprechend auf das Abschaltsignal; Weitergehen zu Schritt 3) ansprechend auf das Ausgangssignal; Weitergehen zu Schritt 4) ansprechend auf das Eingangssignal, und Weitergehen zu Schritt 5) ansprechend auf das Testsignal;
2) unverändertes Beibehalten eines Polaritätsbestimmungsergebnissignals, Ps, das von einem Polaritätsbestimmungsergebnissignal-Ausgangsanschluss der Polaritätsbestimmungsschaltung ausgegeben wird;
Einstellen eines Zeitgeber-Löschsignals, CL, das von einem Zeitgeber-Löschsignal-Ausgangsanschluss der Polaritätsbestimmungsschaltung ausgegeben wird, als gültig, derart, dass eine Zeitgeberschaltung auf Null gelöscht wird, und ein Zeitgeber-Überlauf-Anzeigesignal, OV, das von einem Zeitgeber-Überlauf-Anzeigesignal-Ausgangsanschluss der Zeitgeberschaltung ausgegeben wird, ungültig ist;
Einstellen eines Empfängerfreigabesignals, Re, das von einem Empfängerfreigabesignal-Ausgangsanschluss der Polaritätsbestimmungsschaltung ausgegeben wird, als ungültig, eines Ausgangseinstellungs-Eingangssignals, SI, das von einem Ausgangseinstellungs-Eingangssignal-Ausgangsanschluss der Polaritätsbestimmungsschaltung ausgegeben wird, als irgendeinen Zustand, und eines Ausgangseinstellungs-Freigabesignals, Se, das von einem Ausgangseinstellungs-Freigabesignal-Ausgangsanschluss der Polaritätsbestimmungsschaltung ausgegeben wird, als irgendeinen Zustand, wodurch ein Empfangsdaten-Ausgangssignal, RD, das von einem Empfangsdaten-Ausgangssignal-Ausgangsanschluss einer Empfängerschaltung ausgegeben wird, in einen Hochimpedanz-, Hi-Z-, Zustand gesteuert wird;
Einstellen eines Ausgangsfreigabesignals, Xe, das von einem Ausgangsfreigabesignal-Ausgangsanschluss der Polaritätsbestimmungsschaltung ausgegeben wird, als ungültig, derart, dass sowohl ein Ausgangsanschluss für ein erstes Treiberausgangssignal, X1, als auch ein Ausgangsanschluss für ein zweites Treiberausgangssignal, X2, einer Treiberschaltung in einem Hi-Z-Zustand sind; und
Einstellen eines Testausgangs-Freigabesignals, Te, das von einem Testausgangs-Freigabesignal-Ausgangsanschluss der Polaritätsbestimmungsschaltung ausgegeben wird, als ungültig, derart, dass sowohl ein Ausgangsanschluss für ein erstes Testausgangssignal, T1, als auch ein Ausgangsanschluss für ein zweites Testausgangssignal, T2, einer Testschaltung in einem Hi-Z-Zustand sind;
3) Beibehalten des Polaritätsbestimmungsergebnissignals, Ps; Einstellen des Zeitgeber-Löschsignals, CL, als gültig, derart, dass die Zeitgeberschaltung auf Null gelöscht wird und der Zeitgeber-Überlauf-Anzeigesignal-Ausgangsanschluss der Zeitgeberschaltung das Zeitgeber-Überlauf-Anzeigesignal, OV, ausgibt; und Einstellen des Empfängerfreigabesignals, Re, als gültig, des Ausgangseinstellungs-Freigabesignals, Se, als gültig, des Ausgangseinstellungs-Eingangssignals, SI, als 1 und des Empfangsdaten-Ausgangssignals, RD, als eine Standard-1;
Einstellen des Testausgangs-Freigabesignals, Te, als ungültig, derart, dass sowohl der Ausgangsanschluss für das erste Testausgangssignal, T1, als auch der Ausgangsanschluss für das zweite Testausgangssignal, T2, der Testschaltung in dem Hi-Z-Zustand sind; und
Einstellen des Ausgangsfreigabesignals, Xe, als gültig, derart, dass die Treiberschaltung einen Differenzialausgang auf dem Ausgangsanschluss für das erste Treiberausgangssignal, X1, und dem Ausgangsanschluss für das zweite Treiberausgangssignal, X2, gemäß dem von der Treiberschaltung empfangenen Polaritätsbestimmungsergebnissignal, Ps, und einem Sendedaten-Eingangssignal, XD, mit einer folgenden Ausgangsregel treibt:
wenn das Polaritätsbestimmungsergebnissignal, Ps, anzeigt, dass Polaritäten normal sind, d. h. ein Wert des Polaritätsbestimmungsergebnissignals, Ps, 0 ist: falls das Sendedaten-Eingangssignal, XD, 0 ist, wird eine negative Spannung -Vo zwischen dem Ausgangsanschluss für das erste Treiberausgangssignal, X1, und dem Ausgangsanschluss für das zweite Treiberausgangssignal, X2, der Treiberschaltung ausgegeben; und falls das Sendedaten-Eingangssignal, XD, 1 ist, wird eine positive Spannung Vo zwischen dem Ausgangsanschluss für das erste Treiberausgangssignal, X1, und dem Ausgangsanschluss für das zweite Treiberausgangssignal, X2, der Treiberschaltung ausgegeben;
wenn das Polaritätsbestimmungsergebnissignal, Ps, anzeigt, dass die Polaritäten entgegengesetzt sind, d. h. das Polaritätsbestimmungsergebnissignal, Ps, ist 1: falls das Sendedaten-Eingangssignal, XD, 0 ist, wird die positive Spannung Vo zwischen dem Ausgangsanschluss für das erste Treiberausgangssignal, X1, und dem Ausgangsanschluss für das zweite Treiberausgangssignal, X2, der Treiberschaltung ausgegeben; und falls das Sendedaten-Eingangssignal, XD, 1 ist, wird die negative Spannung -Vo zwischen dem Ausgangsanschluss für das erste Treiberausgangssignal, X1, und dem Ausgangsanschluss für das zweite Treiberausgangssignal, X2, der Treiberschaltung ausgegeben, wobei die positive Spannung Vo eine Spannung ist, die einen Ausgangsspannungsstandard der RS485-Schnittstelle erfüllt;
4) unverändertes Beibehalten des Polaritätsbestimmungsergebnissignals, Ps, das von der Polaritätsbestimmungsschaltung ausgegeben wird; und Einstellen des Zeitgeber-Löschsignals, CL, das von dem Zeitgeber-Löschsignal-Ausgangsanschluss der Polaritätsbestimmungsschaltung ausgegeben wird, als gültig, derart, dass die Zeitgeberschaltung auf Null gelöscht wird und das Zeitgeber-Überlauf-Anzeigesignal, OV, das von dem Zeitgeber-Überlauf-Anzeigesignal-Ausgangsanschluss der Zeitgeberschaltung ausgegeben wird, ungültig ist;
Einstellen des Ausgangsfreigabesignals, Xe, als ungültig, derart, dass sowohl der Ausgangsanschluss für das erste Treiberausgangssignal, X1, als auch der Ausgangsanschluss für das zweite Treiberausgangssignal, X2, der Treiberschaltung, die entsprechend mit einem ersten Anschluss, C, und einem zweiten Anschluss, D, der RS485-Schnittstelle verbunden sind, in dem Hi-Z-Zustand sind;
Einstellen des Testausgangs-Freigabesignals, Te, als ungültig, derart, dass sowohl der Ausgangsanschluss für das erste Testausgangssignal, T1, als auch der Ausgangsanschluss für das zweite Testausgangssignal, T2, der Testschaltung, die entsprechend mit dem ersten Anschluss, C, und dem zweiten Anschluss, D, der RS485-Schnittstelle verbunden sind, in dem Hi-Z-Zustand sind;
Einstellen des Empfängerfreigabesignals, Re, als gültig, des Ausgangseinstellungsfreigabesignals, Se, als ungültig und des Ausgangseinstellungseingangssignals, SI, als irgendeinen Zustand, derart, dass gemäß dem von der Empfängerschaltung empfangenen Polaritätsbestimmungsergebnissignal, Ps, eine Spannungsdifferenz VR1-VR2 zwischen einem Eingangsanschluss für ein erstes empfangenes Eingangssignal, R1, und einem Eingangsanschluss für ein zweites empfangenes Eingangssignal, R2, der Empfängerschaltung, die entsprechend mit dem ersten Anschluss, C, und dem zweiten Anschluss, D, der RS485-Schnittstelle verbunden sind, und einem Hystereseregionsanzeigesignal, Hy, das von einem Hystereseregionsanzeigesignal-Ausgangsanschluss der Empfängerschaltung ausgegeben wird, dem Empfangsdaten-Ausgangssignal, RD, das von dem Empfangsdaten-Ausgangssignal-Ausgangsanschluss der Empfängerschaltung ausgegeben wird, wie folgt spezifiziert ist:
falls die Spannungsdifferenz VR1-VR2 zwischen dem Eingangsanschluss für das erste empfangene Eingangssignal, R1, und dem Eingangsanschluss für das zweite empfangene Eingangssignal, R2, der Empfängerschaltung unverändert ist, wenn das von der Polaritätsbestimmungsschaltung ausgegebene Polaritätsbestimmungsergebnissignal, Ps, invertiert wird, wird das Empfangsdaten-Ausgangssignal, RD, invertiert;
wenn das Polaritätsbestimmungsergebnissignal, Ps, anzeigt, dass die Polaritäten normal sind, d. h. das Polaritätsbestimmungsergebnissignal, Ps, ist 0: falls die Spannungsdifferenz VR1-VR2 nicht kleiner als eine Hysteresespannungsschwelle, Vh, ist, ist das Hystereseregionsanzeigesignal, Hy, ungültig, und das Empfangsdaten-Ausgangssignal, RD, ist 1; falls die Spannungsdifferenz VR1-VR2 nicht größer als -Vh ist, ist das Hystereseregionsanzeigesignal, Hy, ungültig, und das Empfangsdaten-Ausgangssignal, RD, ist 0; und falls die Spannungsdifferenz VR1-VR2 kleiner als Vh aber größer als -Vh ist, ist das Hystereseregionsanzeigesignal, Hy, gültig, und das Empfangsdaten-Ausgangssignal, RD, wird unverändert beibehalten; und
wenn das Polaritätsbestimmungsergebnissignal, Ps, anzeigt, dass die Polaritäten entgegengesetzt sind, d. h. das Polaritätsbestimmungsergebnissignal, Ps, ist 1: falls die Spannungsdifferenz VR1-VR2 nicht kleiner als die Hysteresespannungsschwelle Vh ist, ist das Hystereseregionsanzeigesignal, Hy, ungültig, und das Empfangsdaten-Ausgangssignal, RD, ist 0; falls die Spannungsdifferenz VR1-VR2 nicht größer als -Vh ist, ist das Hystereseregionsanzeigesignal, Hy, ungültig, und das Empfangsdaten-Ausgangssignal, RD, ist 1; und falls die Spannungsdifferenz VR1-VR2 kleiner als Vh, aber größer als -Vh ist, ist das Hystereseregionsanzeigesignal, Hy, gültig, und das Empfangsdaten-Ausgangssignal, RD, wird unverändert beibehalten; und
5) Einstellen des Ausgangsfreigabesignals, Xe, als ungültig für die Treiberschaltung, derart, dass sowohl der Ausgangsanschluss für das erste Treiberausgangssignal, X1, als auch der Ausgangsanschluss für das zweite Treiberausgangssignal, X2, der Treiberschaltung, die entsprechend mit dem ersten Anschluss, C, und dem zweiten Anschluss, D, der RS485-Schnittstelle verbunden sind, in dem Hi-Z-Zustand sind;
Einstellen, für eine Testausgangsschaltung, des Testausgangs-Freigabesignals, Te, als ungültig, falls das von dem Sendedaten-Eingangssignal-Eingangsanschluss der Polaritätsbestimmungsschaltung empfangene Sendedaten-Eingangssignal, XD, 1 ist, derart, dass sowohl der Ausgangsanschluss für das erste Testausgangssignal, T1, als auch der Ausgangsanschluss für das zweite Testausgangssignal, T2, der Testausgangsschaltung in dem Hi-Z-Zustand sind; Einstellen des Testausgangs-Freigabesignals, Te, als gültig, wenn das von dem Sendedaten-Eingangssignal-Eingangsanschluss der Polaritätsbestimmungsschaltung empfangene Sendedaten-Eingangssignal, XD, 0 ist und das Polaritätsbestimmungsergebnissignal, Ps, 1 ist, derart, dass eine Testspannung Vt zwischen dem Ausgangsanschluss für das erste Testausgangssignal, T1, und dem Ausgangsanschluss für das zweite Testausgangssignal, T2, der Testausgangsschaltung ausgegeben wird; und Einstellen des Testausgangs-Freigabesignals, Te, als gültig, wenn das Sendedaten-Eingangssignal, XD, 0 ist und das Polaritätsbestimmungsergebnissignal, Ps, 0 ist, derart, dass eine Testspannung -Vt zwischen dem Ausgangsanschluss für das erste Testausgangssignal, T1, und dem Ausgangsanschluss für das zweite Testausgangssignal, T2, der Testausgangsschaltung ausgegeben wird, wobei die Testspannung Vt größer als die Hysteresespannungsschwelle Vh ist, und durch Zugreifen auf Ausgangsspannungen des Ausgangsanschlusses für das erste Testausgangssignal, T1, und des Ausgangsanschlusses für das zweite Testausgangssignal, T2, der Testausgangsschaltung auf den ersten Anschluss, C, und den zweiten Anschluss, D, der RS485-Schnittstelle ein Ausgangswiderstand vorhanden ist, der mehr als 10-mal größer ist als der eines Falles, in dem Ausgangsspannungen des Ausgangsanschlusses für das erste Treiberausgangssignal, X1, und des Ausgangsanschlusses für das zweite Treiberausgangssignal, X2, der Treiberschaltung mit dem ersten Anschluss, C, und dem zweiten Anschluss, D, der RS485-Schnittstelle verbunden sind;
Einstellen, für die Empfängerschaltung in einem anfänglichen Testzustand, des Empfängerfreigabesignals, Re, als gültig, des Ausgangseinstellungsfreigabesignals, Se, als gültig und des Ausgangseinstellungseingangssignals, SI, als 1, und Initialisieren des Empfangsdaten-Ausgangssignals, RD, als 1, wobei nach Abschluss der Initialisierung das Hystereseregionsanzeigesignal, Hy, und das Empfangsdaten-Ausgangssignal, RD, wie folgt ausgegeben werden:
falls die Spannungsdifferenz VR1-VR2 zwischen dem Eingangsanschluss für das erste empfangene Eingangssignal, R1, und dem Eingangsanschluss für das zweite empfangene Eingangssignal, R2, der Empfängerschaltung unverändert ist, wenn das Polaritätsbestimmungsergebnissignal, Ps, invertiert wird, das Empfangsdaten-Ausgangssignal, RD, invertiert wird;
wenn das Polaritätsbestimmungsergebnissignal, Ps, bei 0 beibehalten wird: falls die Spannungsdifferenz VR1-VR2 nicht kleiner als die Hysteresespannungsschwelle Vh ist, ist das Hystereseregionsanzeigesignal, Hy, ungültig, und das Empfangsdaten-Ausgangssignal, RD, ist 1; falls die Spannungsdifferenz VR1-VR2 nicht größer als -Vh ist, ist das Hystereseregionsanzeigesignal, Hy, ungültig, und das Empfangsdaten-Ausgangssignal, RD, ist 0; und falls die Spannungsdifferenz VR1-VR2 kleiner als Vh, aber größer als -Vh ist, ist das Hystereseregionsanzeigesignal, Hy, gültig, und das Empfangsdaten-Ausgangssignal, RD, wird unverändert beibehalten; und
wenn das Polaritätsbestimmungsergebnissignal, Ps, bei 1 beibehalten wird: falls die Spannungsdifferenz VR1-VR2 nicht kleiner als die Hysteresespannungsschwelle Vh ist, ist das Hystereseregionsanzeigesignal, Hy, das von dem Hystereseregionsanzeigesignal-Ausgangsanschluss der Empfängerschaltung ausgegeben wird, ungültig, und das Empfangsdaten-Ausgangssignal, RD, ist 0; falls die Spannungsdifferenz VR1-VR2 nicht größer als -Vh ist, ist das Hystereseregionsanzeigesignal, Hy, ungültig, und das Empfangsdaten-Ausgangssignal, RD, ist 1; und falls die Spannungsdifferenz VR1-VR2 kleiner als Vh, aber größer als -Vh ist, ist das Hystereseregionsanzeigesignal, Hy, gültig, und das Empfangsdaten-Ausgangssignal, RD, wird unverändert beibehalten; und
Einstellen des Zeitgeber-Löschsignals, CL, für die Zeitgeberschaltung in dem anfänglichen Testzustand als gültig, derart, dass die Zeitgeberschaltung auf Null gelöscht wird und das Zeitgeber-Überlauf-Anzeigesignal, OV, ungültig ist, wobei nach Abschluss der Initialisierung das Zeitgeber-Überlauf-Anzeigesignal, OV, wie folgt ausgegeben wird: wenn das Empfangsdaten-Ausgangssignal, RD, 1 ist und das Hystereseregionsanzeigesignal, Hy, ungültig ist, wird das Zeitgeber-Löschsignal, CL, als gültig eingestellt, derart, dass die Zeitgeberschaltung auf Null gelöscht wird und das ausgegebene Zeitgeber-Überlauf-Anzeigesignal, OV, ungültig ist; wenn das Empfangsdaten-Ausgangssignal, RD, 1 ist und das Hystereseregionsanzeigesignal, Hy, gültig ist, oder wenn das Empfangsdaten-Ausgangssignal, RD, 0 ist und das Hystereseregionsanzeigesignal, Hy, in irgendeinem Zustand ist, wird das Zeitgeber-Löschsignal, CL, als ungültig eingestellt, derart, dass die Zeitgeberschaltung mit der Zeitgebung beginnt, bis die voreingestellte Zeitgeber-Überlaufzeit Tov erreicht ist, das Zeitgeber-Überlauf-Anzeigesignal, OV, ist gültig, und in diesem Fall wird das Polaritätsbestimmungsergebnissignal, Ps, wie folgt ausgegeben:
wenn das Empfangsdaten-Ausgangssignal, RD, 0 ist und das Hystereseregionsanzeigesignal, Hy, in irgendeinem Zustand ist, wird das Polaritätsbestimmungsergebnissignal invertiert; wenn das Empfangsdaten-Ausgangssignal, RD, 1 ist, wird das Empfängerfreigabesignal, Re, als gültig eingestellt, das Ausgangseinstellungs-Freigabesignal, Se, wird als gültig eingestellt, und das Ausgangseinstellungs-Eingangssignal, SI, wird als 0 eingestellt, derart, dass das Empfangsdaten-Ausgangssignal, RD, der Empfängerschaltung als 0 eingestellt wird, und das Polaritätsbestimmungsergebnissignal, Ps, unverändert beibehalten wird; und in der Zwischenzeit wird das Zeitgeber-Löschsignal, CL, als gültig eingestellt, derart, dass die Zeitgeberschaltung auf Null gelöscht wird; und dann wird das Zeitgeber-Löschsignal, CL, der Polaritätsbestimmungsschaltung als ungültig eingestellt, derart, dass die Zeitgeberschaltung die Zeitgebung neu startet.

2. Das Detektionsverfahren zum Handhaben eines Zugriffszustands einer RS485-Schnittstelle gemäß Anspruch 1, ferner umfassend zum Detektieren einer offenen Schaltung der RS485-Schnittstelle:
Schritt 1.1: Einstellen des eingegebenen Funktionszustands-Einstellungssignals, ST, derart, dass eine RS485-Schnittstellenschaltung in einem abgeschalteten Zustand ist, und Einstellen des Sendedaten-Eingangssignals, XD, auf 0;
Schritt 1.2: Einstellen des eingegebenen Funktionszustands-Einstellungssignals, ST, derart, dass die RS485-Schnittstellenschaltung in dem Testzustand ist;
Schritt 1.3: Bestimmen, dass die RS485-Schnittstelle nicht offen ist, falls gegenwärtige Testzeit die Zeitgeber-Überlaufzeit Tov der Zeitgeberschaltung nicht erreicht und das Empfangsdaten-Ausgangssignal, RD, das von dem Empfangsdaten-Ausgangssignal-Eingangsanschluss der Polaritätsbestimmungsschaltung empfangen wird, 1 ist, und Beenden der Detektion; oder andernfalls, Weiterwarten; und
Schritt 1.4: Bestimmen, dass die RS485-Schnittstelle nicht offen ist, falls die gegenwärtige Testzeit größer als die Zeitgeber-Überlaufzeit Tov, aber kleiner als die Zeit 2×Tov ist, und das Empfangsdaten-Ausgangssignal, RD, das von dem Empfangsdaten-Ausgangssignal-Eingangsanschluss der Polaritätsbestimmungsschaltung empfangen wird, 1 ist, und Beenden der Detektion; und Bestimmen, dass die RS485-Schnittstelle offen ist, falls das Empfangsdaten-Ausgangssignal, RD, das von dem Empfangsdaten-Ausgangssignal-Eingangsanschluss der Polaritätsbestimmungsschaltung empfangen wird, 0 ist.

3. Das Detektionsverfahren zum Handhaben eines Zugriffszustands einer RS485-Schnittstelle gemäß Anspruch 2, ferner umfassend zum Detektieren eines Kurzschlusses der RS485-Schnittstelle:
Schritt 2.1: Einstellen des eingegebenen Funktionszustands-Einstellungssignals, ST, derart, dass die RS485-Schnittstellenschaltung in dem abgeschalteten Zustand ist, und Einstellen des Sendedaten-Eingangssignals, XD, als 1;
Schritt 2.2: Einstellen des eingegebenen Funktionszustands-Einstellungssignals, ST, derart, dass die RS485-Schnittstellenschaltung in dem Testzustand ist; Kennzeichnen des von der Polaritätsbestimmungsschaltung empfangenen Empfangsdaten-Ausgangssignals, RD, als ein erstes Empfangsdaten-Ausgangssignal, RD1, falls bestimmt wird, dass das von dem Empfangsdaten-Ausgangssignal-Eingangsanschluss der Polaritätsbestimmungsschaltung empfangene Empfangsdaten-Ausgangssignal, RD, in der Zeitgeber-Überlaufzeit Tov unverändert beibehalten wird, und Weitergehen zu Schritt 2.3; und Warten, falls bestimmt wird, dass das Empfangsdaten-Ausgangssignal, RD, das von dem Empfangsdaten-Ausgangssignal-Eingangsanschluss der Polaritätsbestimmungsschaltung empfangen wird, in der Zeitgeber-Überlaufzeit Tov geändert wird, keine Änderung der Daten der RS485-Schnittstelle erfolgt, und Zurückgehen zu Schritt 2.1;
Schritt 2.3: Kennzeichnen des von der Polaritätsbestimmungsschaltung empfangenen Empfangsdaten-Ausgangssignals, RD, als ein zweites Empfangsdaten-Ausgangssignal, RD2, wenn bestimmt wird, dass das von dem Empfangsdaten-Ausgangssignal-Eingangsanschluss der Polaritätsbestimmungsschaltung empfangene Empfangsdaten-Ausgangssignal, RD, in der nächsten Zeitgeber-Überlaufzeit Tov nach Abwarten der Zeitgeber-Überlaufzeit Tov unverändert beibehalten wird, und Weitergehen zu Schritt 2.4; Abwarten, dass keine Änderung der Daten der RS485-Schnittstelle erfolgt, wenn das Empfangsdaten-Ausgangssignal, RD, geändert wird, und Zurückgehen zu Schritt 2.1; Bestimmen, dass die RS485-Schnittstelle nicht kurzgeschlossen ist, und Beenden der Detektion, falls das erste Empfangsdaten-Ausgangssignal, RD1, gleich dem zweiten Empfangsdaten-Ausgangssignal, RD2, ist; Bestimmen, dass die RS485-Schnittstelle kurzgeschlossen ist, falls das erste Empfangsdaten-Ausgangssignal, RD1, 1 ist und das zweite Empfangsdaten-Ausgangssignal, RD2, 0 ist; und Eintreten in den nächsten Schritt, wenn das erste Empfangsdaten-Ausgangssignal, RD1, 0 ist und das zweite Empfangsdaten-Ausgangssignal, RD2, 1 ist; und
Schritt 2.4: Kennzeichnen des von der Polaritätsbestimmungsschaltung empfangenen Empfangsdaten-Ausgangssignals, RD, als ein drittes Empfangsdaten-Ausgangssignal, RD3, falls bestimmt wird, dass das von dem Empfangsdaten-Ausgangssignal-Eingangsanschluss der Polaritätsbestimmungsschaltung empfangene Empfangsdaten-Ausgangssignal, RD, in der Zeitgeber-Überlaufzeit Tov nach Abwarten der Zeitgeber-Überlaufzeit unverändert beibehalten wird; oder andernfalls Abwarten, dass keine Änderung der Daten der RS485-Schnittstelle erfolgt, und Zurückgehen zu Schritt 2.1; Bestimmen, dass die RS485-Schnittstelle nicht kurzgeschlossen ist, und Beenden der Detektion, wenn das dritte Empfangsdaten-Ausgangssignal, RD3, 1 ist; und Bestimmen, dass die RS485-Schnittstelle kurzgeschlossen ist, und Beenden der Detektion, wenn das dritte Empfangsdaten-Ausgangssignal, RD3, 0 ist und das zweite Empfangsdaten-Ausgangssignal, RD2, 0 ist.

4. Das Detektionsverfahren zum Handhaben eines Zugriffszustands einer RS485-Schnittstelle gemäß Anspruch 3, wobei das Verfahren, nachdem der Zustand der RS485-Schnittstelle detektiert ist, ferner zum Anwenden der RS485-Schnittstelle auf eine Kommunikation umfasst:
Schritt 3.1: Detektieren des Offene-Schaltungs-Zustands der RS485-Schnittstelle gemäß Schritt 1.1 bis Schritt 1.4; Abschalten der RS485-Schnittstelle und Alarmieren, falls bestimmt wird, dass die RS485-Schnittstelle eine offene Schaltung ist; oder andernfalls Eintreten in den nächsten Schritt;
Schritt 3.2: Detektieren des Kurzschlusszustands der RS485-Schnittstelle gemäß Schritt 2.1 bis Schritt 2.4; Abschalten der RS485-Schnittstelle und Alarmieren, falls bestimmt wird, dass die RS485-Schnittstelle kurzgeschlossen ist; oder andernfalls Bestimmen der Polaritäten der RS485-Schnittstelle, Einstellen eines korrekten Polaritätsbestimmungsergebnisses und Eintreten in den nächsten Schritt; und
Schritt 3.3: Eintreten in einen normalen Kommunikationszustand und Einstellen des eingegebenen Funktionszustands-Einstellungssignals, ST, derart, dass die RS485-Schnittstellenschaltung in einen Eingangszustand eintritt und eine Kommunikationsnachricht empfängt; und Einstellen des eingegebenen Funktionszustands-Einstellungssignals, ST, derart, dass die RS485-Schnittstellenschaltung in einen Ausgangszustand eintritt und eine Kommunikationsnachricht sendet.

5. Eine Detektionsschaltung, die zum Ausführen des Detektionsverfahrens gemäß einem der Ansprüche 1 bis 4 ausgebildet ist, umfassend die Polaritätsbestimmungsschaltung, die Zeitgeberschaltung, die Treiberschaltung, die Empfängerschaltung und die Testausgangsschaltung, wobei
der Funktionszustands-Einstellungssignal-Eingangsanschluss der Polaritätsbestimmungsschaltung ausgebildet ist, ein Funktionszustands-Einstellungssignal, ST, einzugeben;
der Zeitgeber-Löschsignal-Ausgangsanschluss der Polaritätsbestimmungsschaltung mit einem Zeitgeber-Löschsignal-Eingangsanschluss der Zeitgeberschaltung verbunden ist;
ein Zeitgeber-Überlauf-Anzeigesignal-Eingangsanschluss der Polaritätsbestimmungsschaltung mit dem Zeitgeber-Überlauf-Anzeigesignal-Ausgangsanschluss der Zeitgeberschaltung verbunden ist;
der Sendedaten-Eingangssignal-Eingangsanschluss der Polaritätsbestimmungsschaltung ausgebildet ist, das Sendedaten-Eingangssignal, XD, einzugeben;
der Empfangsdaten-Ausgangssignal-Eingangsanschluss der Polaritätsbestimmungsschaltung mit dem Empfangsdaten-Ausgangssignal-Ausgangsanschluss der Empfängerschaltung verbunden ist;
der Sendedaten-Eingangssignal-Eingangsanschluss der Treiberschaltung ausgebildet ist, das Sendedaten-Eingangssignal, XD, einzugeben;
ein Polaritätsbestimmungsergebnissignal-Eingangsanschluss der Treiberschaltung mit dem Polaritätsbestimmungsergebnissignal-Ausgangsanschluss der Polaritätsbestimmungsschaltung verbunden ist;
ein Ausgangsfreigabesignal-Eingangsanschluss der Treiberschaltung mit dem Ausgangsfreigabesignal-Ausgangsanschluss der Polaritätsbestimmungsschaltung verbunden ist;
die Treiberschaltung den Ausgangsanschluss für das erste Treiberausgangssignal, X1, der mit dem ersten Anschluss, C, der RS485-Schnittstelle verbunden ist, und den Ausgangsanschluss für das zweite Treiberausgangssignal, X2, der mit einem zweiten Anschluss, D, der RS485-Schnittstelle verbunden ist, umfasst;
ein Polaritätsbestimmungsergebnissignal-Eingangsanschluss der Empfängerschaltung mit dem Polaritätsbestimmungsergebnissignal-Ausgangsanschluss der Polaritätsbestimmungsschaltung verbunden ist;
ein Ausgangseinstellungs-Eingangssignal-Eingangsanschluss der Empfängerschaltung mit dem Ausgangseinstellungs-Eingangssignal-Ausgangsanschluss der Polaritätsbestimmungsschaltung verbunden ist;
ein Ausgangseinstellungs-Freigabesignal-Eingangsanschluss der Empfängerschaltung mit dem Ausgangseinstellungs-Freigabesignal-Ausgangsanschluss der Polaritätsbestimmungsschaltung verbunden ist;
ein Empfängerfreigabesignal-Eingangsanschluss der Empfängerschaltung mit dem Empfängerfreigabesignal-Ausgangsanschluss der Polaritätsbestimmungsschaltung verbunden ist;
der Hystereseregionsanzeigesignal-Ausgangsanschluss der Empfängerschaltung mit einem Hystereseregionsanzeigesignal-Eingangsanschluss der Polaritätsbestimmungsschaltung verbunden ist;
der Eingangsanschluss für das erste empfangene Eingangssignal, R1, der Empfängerschaltung mit dem ersten Anschluss, C, der RS485-Schnittstelle und dem Ausgangsanschluss für das erste Treiberausgangssignal, X1, der Treiberschaltung verbunden ist;
ein Eingangsanschluss für das zweite empfangene Eingangssignal, R2, der Empfängerschaltung mit dem zweiten Anschluss, D, der RS485-Schnittstelle und dem Ausgangsanschluss für das zweite Treiberausgangssignal, X2, der Treiberschaltung verbunden ist;
der Empfangsdaten-Ausgangssignal-Ausgangsanschluss der Empfängerschaltung ausgebildet ist, ein Empfangsdaten-Ausgangssignal, RD, auszugeben;
ein Polaritätsbestimmungsergebnissignal-Eingangsanschluss der Testausgangsschaltung mit dem Polaritätsbestimmungsergebnissignal-Ausgangsanschluss der Polaritätsbestimmungsschaltung verbunden ist;
ein Testausgangs-Freigabesignal-Eingangsanschluss der Testausgangsschaltung mit dem Testausgangs-Freigabesignal-Ausgangsanschluss der Polaritätsbestimmungsschaltung verbunden ist;
der Ausgangsanschluss für das erste Testausgangssignal, T1, der Testausgangsschaltung mit dem ersten Anschluss, C, der RS485-Schnittstelle und dem Ausgangsanschluss für das erste Treiberausgangssignal, X1, der Treiberschaltung verbunden ist; und
der Ausgangsanschluss für das zweite Testausgangssignal, T2, der Testausgangsschaltung mit dem zweiten Anschluss, D, der RS485-Schnittstelle und dem Ausgangsanschluss für das zweite Treiberausgangssignal, X2, der Treiberschaltung verbunden ist.

## Revendications

1. Procédé de détection pour gérer un état d'accès d'une interface RS485, comprenant le fait de
1) déterminer si un signal de réglage d'état fonctionnel (ST) entré à partir d'une borne d'entrée de signal de réglage d'état fonctionnel d'un circuit de détermination de polarité est un signal d'arrêt, un signal de sortie, un signal d'entrée ou un signal de test ; passer à l'étape 2) en réponse au signal d'arrêt ; passer à l'étape 3) en réponse au signal de sortie ; passer à l'étape 4) en réponse au signal d'entrée, et passer à l'étape 5) en réponse au signal de test ;
2) maintenir inchangé un signal de résultat de détermination de polarité (Ps) émis à partir de la borne de sortie de signal de résultat de détermination de polarité du circuit de détermination de polarité ;
régler un signal d'effacement de minuterie (CL) émis à partir d'une borne de sortie de signal d'effacement de minuterie du circuit de détermination de polarité comme valide, de sorte qu'un circuit de minuterie est effacé à zéro et qu'un signal d'indication de dépassement de minuterie (OV) émis à partir d'une borne de sortie de signal d'indication de dépassement de minuterie du circuit de minuterie n'est pas valide ;
régler un signal de validation de récepteur (Re) émis à partir d'une borne de sortie de signal de validation de récepteur du circuit de détermination de polarité comme non valide, un signal d'entrée de réglage de sortie (SI) émis à partir d'une borne de sortie de signal d'entrée de réglage de sortie du circuit de détermination de polarité comme n'importe quel état, et un signal de validation de réglage de sortie (Se) émis par une borne de sortie de signal de validation de réglage de sortie du circuit de détermination de polarité comme n'importe quel état, contrôlant ainsi un signal de sortie de données reçues (RD) émis par une borne de sortie de signal de sortie de données reçues d'un circuit de récepteur dans un état de haute impédance, Hi-Z ;
régler un signal de validation de sortie (Xe) émis par une borne de sortie de signal de validation de sortie du circuit de détermination de polarité comme non valide, de sorte qu'une borne de sortie pour un premier signal de sortie de pilote (X1) et une borne de sortie pour un deuxième signal de sortie de pilote (X2) d'un circuit de pilote sont toutes les deux dans un état Hi-Z ; et
régler un signal de validation de sortie de test (Te) émis par une borne de sortie de signal de validation de sortie de test du circuit de détermination de polarité comme non valide, de sorte qu'une borne de sortie pour un premier signal de sortie de test (T1) et une borne de sortie pour un deuxième signal de sortie de test (T2) d'un circuit de test sont toutes deux dans un état Hi-Z ;
3) maintenir le signal de résultat de détermination de polarité (Ps) ; régler le signal d'effacement de minuterie (CL) comme valide, de sorte que le circuit de minuterie est effacé à zéro, et la borne de sortie de signal d'indication de dépassement de minuterie du circuit de minuterie émet le signal d'indication de dépassement de minuterie (OV) ; et régler le signal de validation de récepteur (Re) comme valide, le signal de validation de réglage de sortie (Se) comme valide, le signal d'entrée de réglage de sortie (SI) comme 1, et le signal de sortie de données reçues (RD) comme un 1 par défaut ;
régler le signal de validation de sortie de test (Te) comme non valide, de sorte que la borne de sortie pour le premier signal de sortie de test (T1) et la borne de sortie pour le deuxième signal de sortie de test (T2) du circuit de test sont toutes deux dans l'état Hi-Z ; et
régler le signal de validation de sortie (Xe) comme valide, de sorte que le circuit de pilote pilote une sortie différentielle sur la borne de sortie pour le premier signal de sortie de pilote (X1) et la borne de sortie pour le deuxième signal de sortie de pilote (X2) en fonction du signal de résultat de détermination de polarité (Ps) reçu par le circuit de pilote et un signal d'entrée de données transmises (XD) avec une règle de sortie suivante :
lorsque le signal de résultat de détermination de polarité (Ps) indique que des polarités sont normales, c'est-à-dire que une valeur du signal de résultat de détermination de polarité (Ps) est égal à 0 : si le signal d'entrée de données transmises (XD) est égal à 0, une tension négative -Vo est émise entre la borne de sortie pour le premier signal de sortie de pilote (X1) et la borne de sortie pour le deuxième signal de sortie de pilote (X2) du circuit de pilote ; et si le signal d'entrée de données transmises (XD) est égal à 1, une tension positive Vo est émise entre la borne de sortie pour le premier signal de sortie de pilote (X1) et la borne de sortie pour le deuxième signal de sortie de pilote (X2) du circuit de pilote ;
lorsque le signal de résultat de détermination de polarité (Ps) indique que les polarités sont opposées, c'est-à-dire que le signal de résultat de détermination de polarité (Ps) est égal à 1 : si le signal d'entrée de données transmises (XD) est égale à 0, la tension positive Vo est émise entre la borne de sortie pour le premier signal de sortie de pilote (X1) et la borne de sortie pour le deuxième signal de sortie de pilote (X2) du circuit de pilote ; et si le signal d'entrée de données transmises (XD) est égale à 1, la tension négative -Vo est émise entre la borne de sortie pour le premier signal de sortie de pilote (X1) et la borne de sortie pour le deuxième signal de sortie de pilote (X2) du circuit de pilote, la tension positive Vo étant une tension satisfaisant à une norme de tension de sortie de l'interface RS485 ;
4) maintenir inchangé le signal de résultat de détermination de polarité (Ps) émis à partir du circuit de détermination de polarité ; et régler le signal d'effacement de minuterie (CL) émis à partir de la borne de sortie de signal d'effacement de minuterie du circuit de détermination de polarité comme valide, de sorte que le circuit de minuterie est effacé à zéro et que le signal d'indication de dépassement de minuterie (OV) émis à partir de la borne de sortie de signal d'indication de dépassement de minuterie du circuit de minuterie n'est pas valide ;
régler le signal de validation de sortie (Xe) comme non valide, de sorte que la borne de sortie pour le premier signal de sortie de pilote (X1) et la borne de sortie pour le deuxième signal de sortie de pilote (X2) du circuit de pilote qui sont connectées de manière correspondante à une première borne (C) et à une deuxième borne (D) de l'interface RS485 sont toutes les deux dans l'état Hi-Z ;
régler le signal de validation de sortie de test (Te) comme non valide, de sorte que la borne de sortie pour le premier signal de sortie de test (T1) et la borne de sortie pour le deuxième signal de sortie de test (T2) du circuit de test qui sont connectées de manière correspondante à la première borne (C) et à la deuxième borne (D) de l'interface RS485 sont toutes les deux dans l'état Hi-Z ;
régler le signal de validation de récepteur (Re) comme valide, le signal de validation de réglage de sortie (Se) comme non valide et le signal d'entrée de réglage de sortie (SI) comme n'importe quel état, de sorte que, selon le signal de résultat de détermination de polarité (Ps) reçu par le circuit de récepteur, une différence de tension VR1-VR2 entre une borne d'entrée pour un premier signal d'entrée reçu (R1) et une borne d'entrée pour un deuxième signal d'entrée reçu (R2) du circuit de récepteur qui sont connectées de manière correspondante à la première borne (C) et à la deuxième borne (D) de l'interface RS485, et un signal d'indication de région hystérétique (Hy) émis à partir d'une borne de sortie de signal d'indication de région hystérétique du circuit de récepteur, le signal de sortie de données reçues (RD) émis à partir de la borne de sortie de signal de sortie de données reçues du circuit de récepteur est spécifié comme suit :
si la différence de tension VR1-VR2 entre la borne d'entrée pour le premier signal d'entrée reçu (R1) et la borne d'entrée pour le deuxième signal d'entrée reçu (R2) du circuit de récepteur est inchangée, lorsque le signal de résultat de détermination de polarité (Ps) émis à partir du circuit de détermination de polarité est inversé, le signal de sortie de données reçues (RD) est inversé ;
lorsque le signal de résultat de détermination de polarité (Ps) indique que les polarités sont normales, c'est-à-dire le signal de résultat de détermination de polarité (Ps) est égal à 0 : si la différence de tension VR1-VR2 n'est pas inférieure à un seuil de tension d'hystérésis (Vh), le signal d'indication de région hystérétique (Hy) n'est pas valide et le signal de sortie de données reçues (RD) est égal à 1 ; si la différence de tension VR1-VR2 n'est pas supérieure à -Vh, le signal d'indication de région hystérétique (Hy) n'est pas valide et le signal de sortie de données reçues (RD) est égal à 0 ; et si la différence de tension VR1-VR2 est inférieure à Vh mais supérieure à -Vh, le signal d'indication de région hystérétique (Hy) est valide et le signal de sortie de données reçues (RD) reste inchangé ; et
lorsque le signal de résultat de détermination de polarité (Ps) indique que les polarités sont opposées, c'est-à-dire le signal de résultat de détermination de polarité (Ps) est égal à 1 : si la différence de tension VR1-VR2 n'est pas inférieure au seuil de tension d'hystérésis Vh, le signal d'indication de région hystérétique (Hy) n'est pas valide et le signal de sortie de données reçues (RD) est égal à 0 ; si la différence de tension VR1-VR2 n'est pas supérieure à -Vh, le signal d'indication de région hystérétique (Hy) n'est pas valide et le signal de sortie de données reçues (RD) est égal à 1 ; et si la différence de tension VR1-VR2 est inférieure à Vh mais supérieure à -Vh, le signal d'indication de région hystérétique (Hy) est valide et le signal de sortie de données reçues (RD) est maintenu inchangé ; et
5) régler, pour le circuit de pilote, le signal de validation de sortie (Xe) comme non valide, de sorte que la borne de sortie pour le premier signal de sortie de pilote (X1) et la borne de sortie pour le deuxième signal de sortie de pilote (X2) du circuit de pilote qui sont connectées de manière correspondante à la première borne (C) et à la deuxième borne (D) de l'interface RS485 sont toutes les deux dans l'état Hi-Z ;
régler, pour un circuit de sortie de test, si le signal d'entrée de données transmises (XD) reçu par la borne d'entrée de signal d'entrée de données transmises du circuit de détermination de polarité est égal à 1, le signal de validation de sortie de test (Te) comme non valide, de sorte que la borne de sortie pour le premier signal de sortie de test (T1) et la borne de sortie pour le deuxième signal de sortie de test (T2) du circuit de sortie de test sont toutes deux dans l'état Hi-Z ; régler, lorsque le signal d'entrée de données transmises (XD) reçu par la borne d'entrée de signal d'entrée de données transmises du circuit de détermination de polarité est égal à 0 et que le signal de résultat de détermination de polarité (Ps) est égal à 1, le signal de validation de sortie de test (Te) comme valide, de sorte qu'une tension de test Vt est émise entre la borne de sortie pour le premier signal de sortie de test (T1) et la borne de sortie pour le deuxième signal de sortie de test (T2) du circuit de sortie de test ; et régler, lorsque le signal d'entrée de données transmises (XD) est égal à 0 et que le signal de résultat de détermination de polarité (Ps) est égal à 0, le signal de validation de sortie de test (Te) comme valide, de sorte qu'une tension de test -Vt est émise entre la borne de sortie pour le premier signal de sortie de test (T1) et la borne de sortie pour le deuxième signal de sortie de test (T2) du circuit de sortie de test, la tension de test Vt étant supérieure au seuil de tension d'hystérésis Vh, et en accédant aux tensions de sortie de la borne de sortie pour le premier signal de sortie de test (T1) et de la borne de sortie pour le deuxième signal de sortie de test (T2) du circuit de sortie de test à la première borne (C) et à la deuxième borne (D) de l'interface RS485, il y a une résistance de sortie plus de 10 fois supérieure à celle d'un cas dans lequel les tensions de sortie de la borne de sortie pour le premier signal de sortie de pilote (X1) et de la borne de sortie pour le deuxième signal de sortie de pilote (X2) du circuit de pilote sont connectées à la première borne (C) et à la deuxième borne (D) de l'interface RS485 ;
régler, pour le circuit de récepteur dans un état de test initial, le signal de validation de récepteur (Re) comme valide, le signal de validation de réglage de sortie (Se) comme valide, et le signal d'entrée de réglage de sortie (SI) comme 1, et initialiser le signal de sortie de données reçues (RD) comme 1, dans lequel, à la fin de l'initialisation, le signal d'indication de région hystérétique (Hy) et le signal de sortie de données reçues (RD) sont émises comme suit :
si la différence de tension VR1-VR2 entre la borne d'entrée pour le premier signal d'entrée reçu (R1) et la borne d'entrée pour le deuxième signal d'entrée reçu (R2) du circuit de récepteur est inchangée, lorsque le signal de résultat de détermination de polarité (Ps) est inversé, le signal de sortie de données reçues (RD) est inversé ;
lorsque le signal de résultat de détermination de polarité (Ps) est maintenu à 0 : si la différence de tension VR1-VR2 n'est pas inférieure au seuil de tension d'hystérésis Vh, le signal d'indication de région hystérétique (Hy) n'est pas valide et le signal de sortie de données reçues (RD) est égal à 1 ; si la différence de tension VR1-VR2 n'est pas supérieure à -Vh, le signal d'indication de région hystérétique (Hy) n'est pas valide et le signal de sortie de données reçues (RD) est égal à 0 ; et si la différence de tension VR1-VR2 est inférieure à Vh mais supérieure à -Vh, le signal d'indication de région hystérétique (Hy) est valide et le signal de sortie de données reçues (RD) est maintenu inchangé ; et
lorsque le signal de résultat de détermination de polarité (Ps) est maintenu à 1 : si la différence de tension VR1-VR2 n'est pas inférieure au seuil de tension d'hystérésis Vh, le signal d'indication de région hystérétique (Hy) émis à partir de la borne de sortie de signal d'indication de région hystérétique du circuit de récepteur n'est pas valide, et le signal de sortie de données reçues (RD) est égal à 0 ; si la différence de tension VR1-VR2 n'est pas supérieure à -Vh, le signal d'indication de région hystérétique (Hy) n'est pas valide et le signal de sortie de données reçues (RD) est égal à 1 ; et si la différence de tension VR1-VR2 est inférieure à Vh mais supérieure à -Vh, le signal d'indication de région hystérétique (Hy) est valide et le signal de sortie de données reçues (RD) est maintenu inchangé ; et
régler, pour le circuit de minuterie dans l'état de test initial, le signal d'effacement de minuterie (CL) comme valide, de sorte que le circuit de minuterie est effacé à zéro, et le signal d'indication de dépassement de minuterie (OV) n'est pas valide, dans lequel, à la fin de l'initialisation, le signal d'indication de dépassement de minuterie (OV) est émis comme suit : lorsque le signal de sortie de données reçues (RD) est égal à 1 et que le signal d'indication de région hystérétique (Hy) n'est pas valide, le signal d'effacement de minuterie (CL) est réglé comme valide, de sorte que le circuit de minuterie est effacé à zéro et que le signal d'indication de dépassement de minuterie de sortie (OV) n'est pas valide ; lorsque le signal de sortie de données reçues (RD) est égale à 1 et que le signal d'indication de région hystérétique (Hy) est valide, ou lorsque le signal de sortie de données reçues (RD) est égale à 0 et que le signal d'indication de région hystérétique (Hy) est dans n'importe quel état, le signal d'effacement de minuterie (CL) est réglé comme non valide, de sorte que le circuit de minuterie commence à chronométrer jusqu'au temps de dépassement de minuterie prédéfini Tov, le signal d'indication de dépassement de minuterie (OV) est valide et, dans ce cas, le signal de résultat de détermination de polarité (Ps) est émis comme suit :
si le signal de sortie de données reçues (RD) est égal à 0 et que le signal d'indication de région hystérétique (Hy) est dans n'importe quel état, le signal de résultat de détermination de polarité est inversé ; si le signal de sortie de données reçues (RD) est égal à 1, le signal de validation de récepteur (Re) est réglé comme valide, le signal de validation de réglage de sortie (Se) est réglé comme valide et le signal d'entrée de réglage de sortie (SI) est réglé comme 0, de sorte que le signal de sortie de données reçues (RD) du circuit de récepteur est réglé comme 0 et que le signal de résultat de détermination de polarité (Ps) est maintenu inchangé ; et entre-temps, le signal d'effacement de minuterie (CL) est réglé comme valide, de sorte que le circuit de minuterie est effacé à zéro ; et puis le signal d'effacement de minuterie (CL) du circuit de détermination de polarité est réglé comme invalide, de sorte que le circuit de minuterie redémarre le chronométrage.

2. Procédé de détection pour gérer un état d'accès d'une interface RS4855 selon la revendication 1, comprenant en outre le fait de détecter un circuit ouvert de l'interface RS485 :
étape 1.1 : le fait de régler le signal de réglage d'état fonctionnel entré (ST) de sorte qu'un circuit d'interface RS485 est dans un état d'arrêt, et le fait de régler le signal d'entrée de données transmises (XD) à 0 ;
étape 1.2 : le fait de régler le signal de réglage d'état fonctionnel entré (ST) de sorte que le circuit d'interface RS485 est dans l'état de test ;
étape 1.3 : le fait de déterminer, si le temps de test actuel n'atteint pas le temps de dépassement de minuterie Tov du circuit de minuterie et si le signal de sortie de données reçues (RD) reçu par la borne d'entrée de signal de sortie de données reçues du circuit de détermination de polarité est égale à 1, que l'interface RS485 n'est pas ouverte, et mettre fin à la détection ; ou, sinon, continuer à attendre ; et
étape 1.4 : le fait de déterminer, si le temps de test actuel est supérieur au temps de dépassement de minuterie Tov mais inférieur au temps 2×Tov, et si le signal de sortie de données reçues (RD) reçu par la borne d'entrée de signal de sortie de données reçues du circuit de détermination de polarité est égale à 1, que l'interface RS485 n'est pas ouverte, et mettre fin à la détection ; et le fait de déterminer, si le signal de sortie de données reçues (RD) reçu par la borne d'entrée de signal de sortie de données reçues du circuit de détermination de polarité est égale à 0, que l'interface RS485 est ouverte.

3. Procédé de détection pour gérer un état d'accès d'une interface RS4855 selon la revendication 2, comprenant en outre le fait de détecter un court-circuit de l'interface RS485 :
étape 2.1 : le fait de régler le signal de réglage d'état fonctionnel entré (ST) de sorte que le circuit d'interface RS485 est dans l'état d'arrêt, et le fait de régler le signal d'entrée de données transmises (XD) comme 1 ;
étape 2.2 : le fait de régler le signal de réglage d'état fonctionnel entré (ST) de sorte que le circuit d'interface RS485 est dans l'état de test ; le fait d'étiqueter, si l'on détermine que le signal de sortie de données reçues (RD) reçu par la borne d'entrée de signal de sortie de données reçues du circuit de détermination de polarité reste inchangé dans le temps de dépassement de minuterie Tov, le signal de sortie de données reçues (RD) reçu par le circuit de détermination de polarité en tant que un premier signal de sortie de données reçues (RD1), et passage à l'étape 2.3 ; et attendre, si l'on détermine que le signal de sortie de données reçues (RD) reçu par la borne d'entrée de signal de sortie de données reçues du circuit de détermination de polarité est changé dans le temps de dépassement de minuterie Tov, qu'il n'y a pas de changement dans les données de l'interface RS485, et revenir à l'étape 2.1 ;
étape 2.3 : le fait d'étiqueter, si l'on détermine que le signal de sortie de données reçues (RD) reçu par la borne d'entrée de signal de sortie de données reçues du circuit de détermination de polarité reste inchangé dans le temps de dépassement de minuterie suivant Tov après avoir attendu le temps de dépassement de minuterie Tov, le signal de sortie de données reçues (RD) reçu par le circuit de détermination de polarité comme un deuxième signal de sortie de données reçues (RD2), et passage à l'étape 2.4 ; le fait d'attendre, si le signal de sortie de données reçues (RD) est changé, pas de changement dans les données de l'interface RS485, et retour à l'étape 2.1 ; le fait de déterminer que l'interface RS485 n'est pas en court-circuit et mettre fin à la détection si le premier signal de sortie de données reçues (RD1) est égal au deuxième signal de sortie de données reçues (RD2) ; le fait de déterminer que l'interface RS485 est en court-circuit si le premier signal de sortie de données reçues (RD1) est égal à 1 et que le deuxième signal de sortie de données reçues (RD2) est égal à 0 ; le fait de passer à l'étape suivante si le premier signal de sortie de données reçues (RD1) est égal à 0 et que le deuxième signal de sortie de données reçues (RD2) est égal à 1 ; et
étape 2.4 : le fait d'étiqueter, si l'on détermine que le signal de sortie de données reçues (RD) reçu par la borne d'entrée de signal de sortie de données reçues du circuit de détermination de polarité reste inchangé dans le temps de dépassement de minuterie Tov après avoir attendu le temps de dépassement de minuterie Tov, le signal de sortie de données reçues (RD) reçu par le circuit de détermination de polarité en tant qu'un troisième signal de sortie de données reçues (RD3) ; ou sinon, attendre l'absence de changement dans les données de l'interface RS485, et retour à l'étape 2.1 ; le fait de déterminer que l'interface RS485 n'est pas en court-circuit et mettre fin à la détection si le troisième signal de sortie de données reçues (RD3) est égale à 1 ; et le fait de déterminer que l'interface RS485 est en court-circuit et mettre fin à la détection si le troisième signal de sortie de données reçues (RD3) est égale à 0 et si le deuxième signal de sortie de données reçues (RD2) est égale à 0.

4. Procédé de détection pour gérer un état d'accès d'une interface RS4855 selon la revendication 3, dans lequel après la détection de l'état de l'interface RS485, le procédé comprend en outre pour l'application de l'interface RS485 à une communication :
étape 3.1 : le fait de détecter l'état de circuit ouvert de l'interface RS485 conformément aux étapes 1.1 à 1.4 ; le fait d'arrêter l'interface RS485 et déclencher une alarme si l'on détermine que l'interface RS485 est en circuit ouvert ; ou, sinon, le fait de passer à l'étape suivante ;
étape 3.2 : le fait de détecter l'état de court-circuit de l'interface RS485 conformément aux étapes 2.1 à 2.4 ; le fait d'arrêter l'interface RS485 et déclencher une alarme si l'on détermine que l'interface RS485 est en court-circuit ; ou sinon, le fait de déterminer des polarités de l'interface RS485, le fait de régler un résultat de détermination de polarité correcte et le fait de passer à l'étape suivante ; et
étape 3.3 : le fait d'entrer dans un état de communication normal et régler le signal de réglage d'état fonctionnel entré (ST), de sorte que le circuit d'interface RS485 entre dans un état d'entrée et reçoit un message de communication ; et le fait de régler le signal de réglage d'état fonctionnel entré (ST), de sorte que le circuit d'interface RS485 entre dans un état de sortie et transmet un message de communication.

5. Circuit de détection configuré pour mettre en oeuvre le procédé de détection selon l'une des revendications 1 à 4, comprenant le circuit de détermination de polarité, le circuit de minuterie, le circuit de pilote, le circuit de récepteur et le circuit de sortie de test, dans lequel
la borne d'entrée de signal de réglage d'état fonctionnel du circuit de détermination de polarité est configurée pour entrer un signal de réglage d'état fonctionnel (ST) ;
la borne de sortie de signal d'effacement de minuterie du circuit de détermination de polarité est connectée à une borne d'entrée de signal d'effacement de minuterie du circuit de minuterie ;
une borne d'entrée de signal d'indication de dépassement de minuterie du circuit de détermination de polarité est connectée à la borne de sortie de signal d'indication de dépassement de minuterie du circuit de minuterie ;
la borne d'entrée de signal d'entrée de données transmises du circuit de détermination de polarité est configurée pour entrer le signal d'entrée de données transmises (XD) ;
la borne d'entrée de signal de sortie de données reçues du circuit de détermination de polarité est connectée à la borne de sortie de signal de sortie de données reçues du circuit de récepteur ;
la borne d'entrée de signal d'entrée de données transmises du circuit de pilote est configurée pour entrer le signal d'entrée de données transmises (XD) ;
une borne d'entrée de signal de résultat de détermination de polarité du circuit de pilote est connectée à la borne de sortie de signal de résultat de détermination de polarité du circuit de détermination de polarité ;
une borne d'entrée de signal de validation de sortie du circuit de pilote est connectée à la borne de sortie de signal de validation de sortie du circuit de détermination de polarité ;
le circuit de pilote comprend la borne de sortie pour le premier signal de sortie de pilote (X1) connecté à la première borne (C) de l'interface RS485, et la borne de sortie pour le deuxième signal de sortie de pilote (X2) connecté à une deuxième borne (D) de l'interface RS485 ;
une borne d'entrée de signal de résultat de détermination de polarité du circuit de récepteur est connectée à la borne de sortie de signal de résultat de détermination de polarité du circuit de détermination de polarité ;
une borne d'entrée de signal d'entrée de réglage de sortie du circuit de récepteur est connectée à la borne de sortie de signal d'entrée de réglage de sortie du circuit de détermination de polarité ;
une borne d'entrée de signal de validation de réglage de sortie du circuit de récepteur est connectée à la borne de sortie de signal de validation de réglage de sortie du circuit de détermination de polarité ;
une borne d'entrée de signal de validation de récepteur du circuit de récepteur est connectée à la borne de sortie de signal de validation de récepteur du circuit de détermination de polarité ;
la borne de sortie de signal d'indication de région hystérétique du circuit de récepteur est connectée à une borne d'entrée de signal d'indication de région hystérétique du circuit de détermination de polarité ;
la borne d'entrée pour le premier signal d'entrée reçu (R1) du circuit de récepteur est connectée à la première borne (C) de l'interface RS485 et à la borne de sortie pour le premier signal de sortie de pilote (X1) du circuit de pilote ;
une borne d'entrée pour le deuxième signal d'entrée reçu (R2) du circuit de récepteur est connectée à la deuxième borne (D) de l'interface RS485 et à la borne de sortie pour le deuxième signal de sortie de pilote (X2) du circuit de pilote ;
la borne de sortie de signal de sortie de données reçues du circuit de récepteur est configurée pour émettre un signal de sortie de données reçues (RD) ;
une borne d'entrée de signal de résultat de détermination de polarité du circuit de sortie de test est connectée à la borne de sortie de signal de résultat de détermination de polarité du circuit de détermination de polarité ;
une borne d'entrée de signal de validation de sortie de test du circuit de sortie de test est connectée à la borne de sortie de signal de validation de sortie de test du circuit de détermination de polarité ;
la borne de sortie pour le premier signal de sortie de test (T1) du circuit de sortie de test est connectée à la première borne (C) de l'interface RS485 et à la borne de sortie pour le premier signal de sortie de pilote (X1) du circuit de pilote ; et
la borne de sortie pour le deuxième signal de sortie de test (T2) du circuit de sortie de test est connectée à la deuxième borne (D) de l'interface RS485 et à la borne de sortie du deuxième signal de sortie de pilote (X2) du circuit de pilote.
